# EUROPEAN PATENT SPECIFICATION

(11) **EP 4 257 319 B1**
(45) Date of publication and mention of the grant of the patent: **05.11.2025**
(21) Application number: 23165365.0
(22) Date of filing: 30.03.2023
(51) Int. Cl.: B23Q 1/03, B23Q 3/08, B24B 41/06, B28D 1/00, B24B 9/10, B28D 1/18, B28D 7/00, B28D 7/04

(54) **NUMERICAL-CONTROL WORK CENTRE FOR MACHINING PLATES OF GLASS OR PLATES OF NATURAL OR SYNTHETIC STONE MATERIAL, AND CORRESPONDING MACHINING METHOD**
NUMERISCH GESTEUERTES BEARBEITUNGSZENTRUM ZUR BEARBEITUNG VON PLATTEN AUS GLAS ODER PLATTEN AUS NATUR- ODER KUNSTSTEINMATERIAL UND ENTSPRECHENDES BEARBEITUNGSVERFAHREN
CENTRE DE TRAVAIL À COMMANDE NUMÉRIQUE POUR L'USINAGE DE PLAQUES DE VERRE OU DE PLAQUES EN PIERRE NATURELLE OU SYNTHÉTIQUE ET PROCÉDÉ D'USINAGE CORRESPONDANT

(30) Priority: 07.04.2022 IT 202200006983
(43) Date of publication of application: 11.10.2023
(73) Proprietor: Biesse S.p.A., 61122 Chiusa di Ginestreto (Pesaro Urbino) (IT)
(72) Inventor: BELLI, Mr. Marco, I-61122 Chiusa di Ginestreto (Pesaro Urbino) (IT); TRAINI, Mr. Matteo, I-61122 Chiusa di Ginestreto (Pesaro Urbino) (IT)
(74) Representative: Buzzi, Notaro & Antonielli d'Oulx S.p.A.

(56) References cited:
- EP-A1- 0 507 033
- EP-A1- 3 819 080
- EP-A2- 1 201 612
- EP-B1- 3 658 345

## Description

### Field of the invention

The present invention relates to numerical-control work centres for machining plates of glass or plates of natural or synthetic stone material of the type referred to in the preamble of claim 1.

### Prior art

The present applicant has for some time been producing and marketing numerical-control work centres. Work centres of this type are also described and illustrated in the documents EP 2 998 088 B1**,** EP 3 124 195 B1**,** EP 3 213 896 B1**,** EP 1 591 427 B1**,** and EP 1 894 897 B1**,** all of which are filed in the name of the present applicant.

In conventional work centres, the suction-cup units used for supporting in a fixed position the plate to be machined in the working area are positioned manually one by one by the operator above the working surface of the machine, choosing positions that depend upon the shape and dimensions of the plate in such a way as to ensure stable maintenance of the plate in a fixed horizontal position at a distance from the working surface of the machine, and leaving at the same time free the peripheral area of the plate to prevent any interference with the tool used for machining the edge of the plate.

In such conventional work centres, the operations of tooling of the machine consequently prove long and laborious.

Work centres have also been proposed in which the suction-cup units are mobile on slides prearranged in the working area and controlled by respective actuators in such a way that they can be adjusted in position in the working area in a completely automated way. The documents US-A-5 700 117 A**,** EP 1 270 147 A2**,** IT 255 691 U and EP 3 658 345 B1 (the latter two of which are filed in the name of the present applicant) show solutions of this type.

In particular, EP 3 658 345 B1 discloses a work centre according to the preamble of claim 1, and a method according to the preamble of claim 11.

Such solutions are relatively complex and entail the need to maintain constantly efficient the guide systems of the suction-cup units, which remain permanently in the working area and are hence constantly exposed to foreign agents, in particular, machining wastes and swarf, present in the working area.

There is consequently felt the need for further improvements that will enable a higher degree of automation of the production process and will render it more efficient and faster.

Finally, there is also felt the need to increase the degree of safety of the operators during the operations of loading and unloading of the plates.

A work centre is known from the document EP 3 819 080 A1 filed in the name of the present applicant. The work centre illustrated in this document is of the type in which a plate is machined while it is fed in a longitudinal direction on a horizontal working surface. The plate is supported by a plurality of suction-cup members carried in groups by various carriages that can be moved in a longitudinal direction. Different suction-cup units can be moved with respect to one another in the longitudinal direction by varying the relative position of the aforesaid carriages. However, the suction-cup members carried by each carriage are in a fixed position with respect to the carriage.

### Object of the invention

A first object of the present invention is to provide a work centre of the type referred to above in which the operation of positioning of the suction-cup units can be carried out in a completely automated way and in a relatively short time.

A further object of the invention is to achieve the aforesaid aim with means that will be simple and reliable in operation and that will not require frequent servicing operations.

A further object of the invention is to enable the operator to carry out the operations of loading and unloading of the plates in a simple, fast, and ergonomic way, and above all in highly safe conditions.

A further object of the invention is to provide a work centre of the type referred to above in which it is possible to ensure maintenance of the plate in a fixed position in the working area by means of a number of suction-cup units that is relatively small as compared to what is necessary in conventional systems, with the further advantage of being able to leave unaltered the arrangement of the suction-cup units for plate configurations that differ from one another.

A further object of the invention is to provide a work centre in which it will be possible to obtain the aforesaid automated adjustment of the position of the suction-cup unit but in which it will also be possible to operate as in conventional work centres, manually positioning the suction-cup units in the working area.

### Summary of the invention

With a view to achieving one or more of the aforesaid objects, the subject of the invention is a numerical-control work centre having the characteristics of claim 1 and a machining method according to claim 11.

Thanks to the aforesaid characteristics, the operation of positioning of the suction-cup units can be carried out in a completely automated way and in a relatively short time. Moreover, the operation of loading of the plate on the suction-cup units can be carried out by the operator in a simple, convenient, and ergonomic way, and above all in conditions of safety, owing to the fact that it takes place outside the working area of the machine, in an environment that is moreover free from foreign bodies such as machining waste and swarf.

Further characteristics of various embodiments of the invention are specified in the dependent claims.

### Detailed description of a preferred embodiment

Further characteristics and advantages of the invention will emerge from the ensuing description with reference to the annexed drawings, which are provided purely by way of non-limiting example and in which:
- Figure 1 is a perspective view of an example of embodiment of a work centre according to the invention;
- Figure 1A is a block diagram of the system for controlling the machining head of the work centre of Figure 1;
- Figure 2 is a perspective view at an enlarged scale of the loading and/or unloading area of the work centre of Figure 1;
- Figures 3 and 4 are two perspective views that represent an example of embodiment of the carriage that carries the suction-cup units of the work centre of Figure 1, in two different operating conditions of the suction-cup units;
- Figure 4A is a cross sectional view that shows the stationary structure having the function of guiding movement of the carriage that carries the suction-cup units, with the carriage mounted thereon;
- Figure 5 is a schematic illustration of a plurality of shapes of plate that can be machined in the work centre of Figure 1;
- Figures 6 and 7 are top plan views of the work centre of Figure 1 in two different operating conditions, corresponding respectively to loading of a plate in the loading area of the work centre and to positioning of the plate within the working area inside the work centre;
- Figure 8 is a further perspective view that illustrates the work centre of Figure 1 in a condition where the machining head is performing a machining cycle on a plate positioned in the working area;
- Figure 9 is a further perspective view at an enlarged scale of a detail of Figure 8;
- Figure 10 is a side view of the work centre in the condition illustrated in Figures 8 and 9;
- Figure 11 is a perspective view of the machining head of the work centre according to the invention, in a preferred embodiment;
- Figures 12 and 13 are cross-sectional views of the machining head of Figure 1, with the spindle unit illustrated, respectively, in its raised, inoperative, position set at a distance from the auxiliary plate-supporting unit, and in its lowered, operative, position within the auxiliary plate-supporting unit;
- Figures 14 and 15 are a perspective view and a top plan view of the auxiliary plate-supporting unit;
- Figure 16 is a further partially sectioned perspective view of the auxiliary plate-supporting unit;
- Figures 17 and 18 are further cross-sectional views of the auxiliary plate-supporting unit;
- Figures 19 and 20 are perspective views that represent a work centre equipped with the machining head of Figures 11 to 18 that is used with plates blocked in a conventional way by means of suction-cup units and locator members arranged on the working surface;
- Figures 21-24 are top plan views of the work centre of Figures 19, 20 that illustrate plates with different shapes blocked with suction-cup units and locator members arranged in various ways on the working surface;
- Figure 25 is a variant of Figure 2;
- Figure 25A illustrates a detail of Figure 25 at an enlarged scale; and
- Figure 26 is a top plan view of a plate that shows the operating principle of the variant of Figure 25.

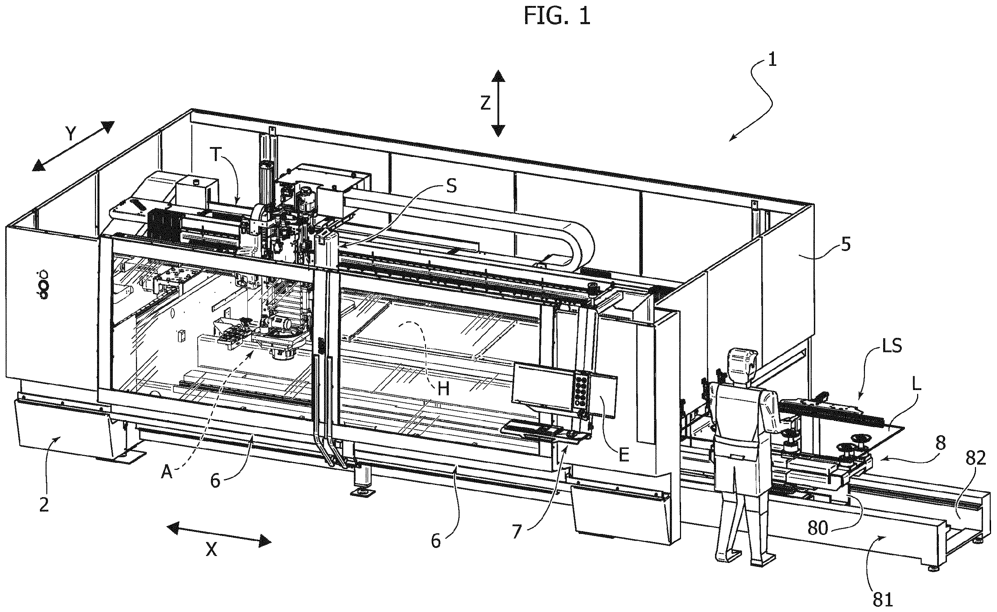

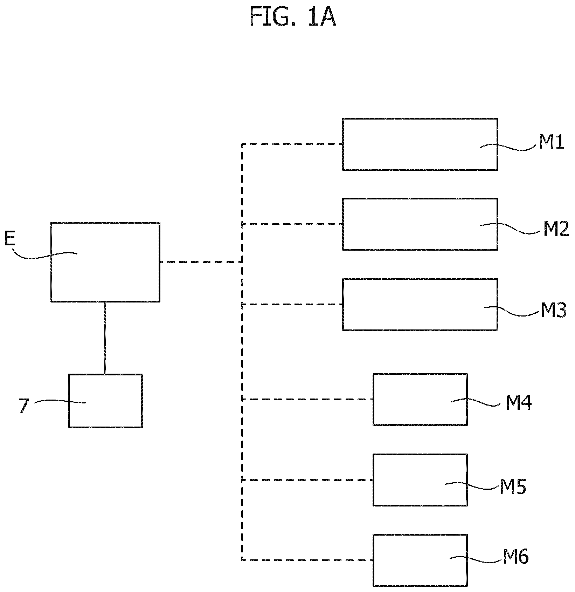

In Figure 1, the reference 1 designates as a whole a numerical-control work centre for machining plates of glass or plates of stone material, whether natural or synthetic.

The work centre 1 comprises a load-bearing structure 2 defining a working area A protected by a safety fence 5, which in the example illustrated comprises two sliding gates 6 on its front side.

In a way in itself known, the work centre comprises a machining head H that is mobile according to three mutually orthogonal axes: a first horizontal axis denoted by X in Figure 1, a second horizontal axis denoted by Y in Figure 1, and a third vertical axis denoted by Z in Figure 1.

According to the prior art, the machining head H can be moved according to the three axes X, Y, Z by being driven by respective servo-controlled electric motors M1, M2, M3 (not visible in Figure 1, but illustrated in the diagram of Figure 1A). The electric motors that control the movements of the machining head H along the three axes X, Y, Z are controlled by an electronic controller E equipped with a human-machine interface 7.

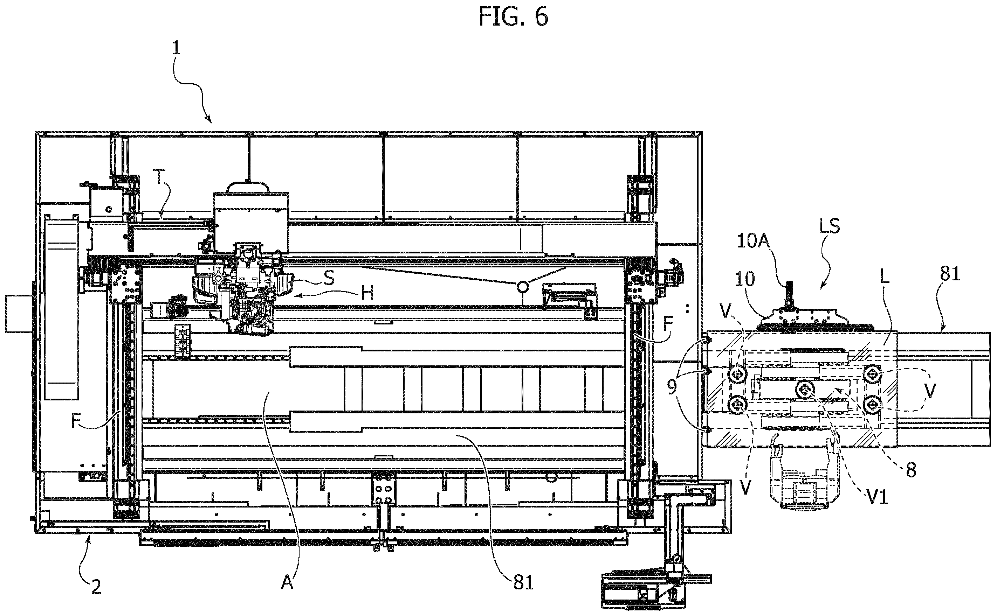

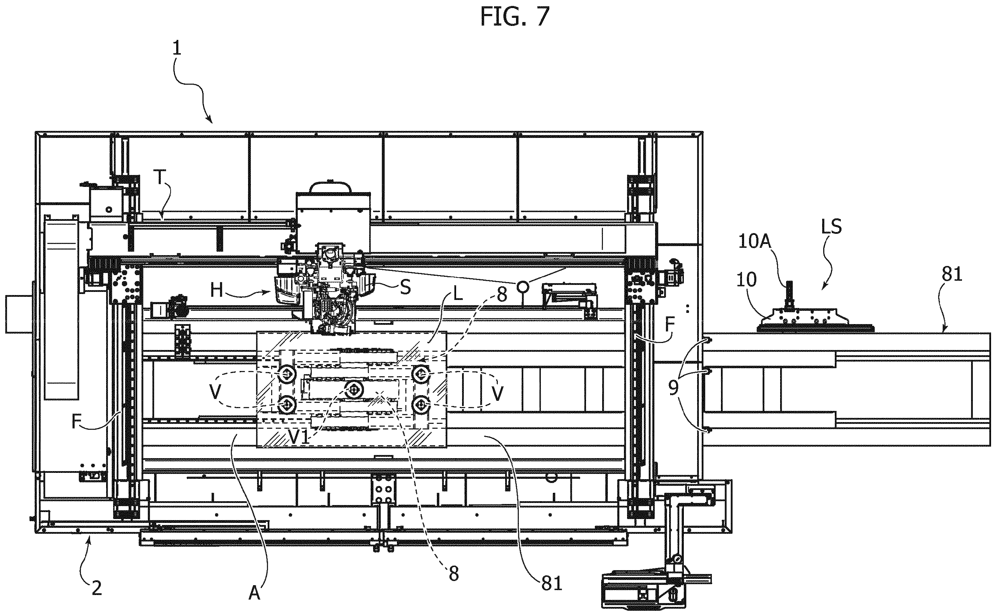

The example of embodiment of the work centre according to the invention that is illustrated in the drawings has a general configuration of the type in which the machining head H has a spindle unit (described in further detail in what follows) mobile in the vertical direction Z, by means of the electric motor M3, with respect to a supporting slide S, which is in turn mobile in the horizontal direction X (by means of the electric motor M1) along an overhead beam T. The beam T extends in the direction X over the working area A and has its ends guided in the direction Y along two side portions F (see Figures 6 and 7) of the fixed structure 2 of the work centre. The beam T is movable in the direction Y by means of the electric motor M2 (Figure 1A).

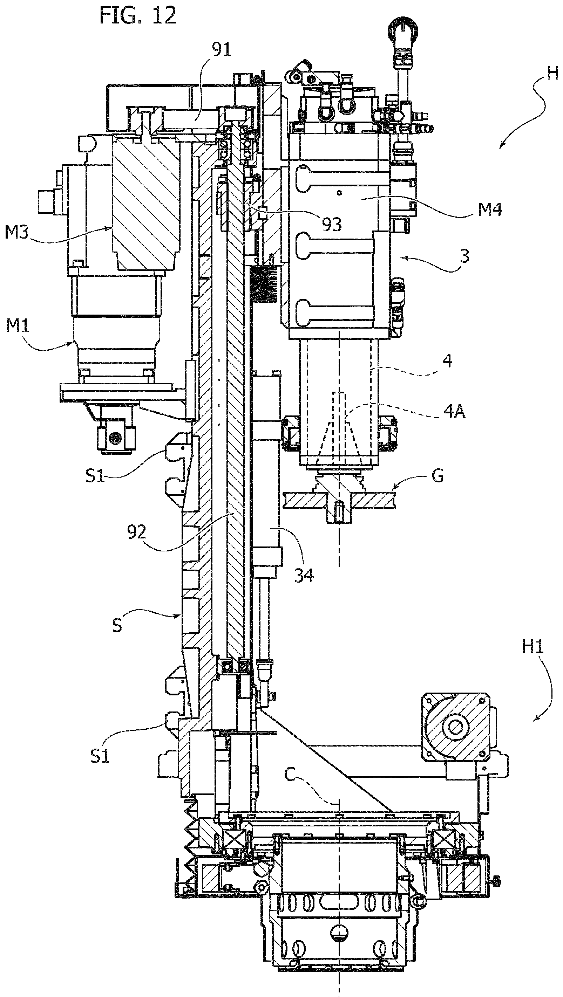

The machining head H comprises a spindle unit 3 (see, for example, Figure 12) including a vertical-axis spindle 4 and an electric motor M4 for driving the spindle. Once again according to the prior art, the bottom end of the spindle 4 is equipped with a coupling device 4A, in itself of a known type, for removable connection of a machining tool, for example a vertical-axis grinding wheel G (Figure 12) or an aggregate (not illustrated), which includes, in a way in itself known, a cup wheel with a horizontal axis and a pair of bevel gears for transmitting motion from the spindle to the horizontal-axis grinding wheel.

Once again according to the prior art, in the work centre 1 the plate to be machined is positioned in the working area A, in a fixed horizontal position, and the electronic controller E governs movement of the machining head H along the peripheral edge of the plate to carry out machining of the edge of the plate, according to a preset program, on the basis of the information on the shape and dimensions of the plate and on the desired type of machining, which is supplied to the electronic controller E by means of the interface 7. Nothing rules out, however, that this information can be supplied to the electronic controller in an automated way, for example exploiting signals transmitted by a system of optical detection of the plate.

In conventional work centres, the plate is kept fixed in a horizontal position in the working area A by means of a plurality of suction-cup units. According to the aforesaid prior art, the suction-cup units are independent units that can be positioned as desired on a working surface inside the working area A to obtain the best support for the plate to be machined, according to the shape and dimensions of the plate. Each suction-cup unit, in the conventional solution, comprises both a bottom suction cup that is activated to block the suction-cup unit on the working surface and a top suction cup, which is activated to block the plate to be machined thereon. The suction-cup units are activated or deactivated by controlling connection thereof to a negative-pressure source.

In the conventional solution, the suction-cup units positioned on the working surface keep the plate to be machined in a fixed horizontal position at a distance from the working surface so that the peripheral edge of the plate is free to be engaged by the tool (typically a grinding wheel) carried by the machining head H, during movement of the machining head H along the edge of the plate.

As already mentioned, in work centres according to the more conventional technique the operations necessary for repositioning the suction-cup units on the working surface whenever it is necessary to machine a plate having a different shape and/or size with respect to a plate machined previously, entails a considerable expenditure of time and a reduction of the degree of safety for the operator.

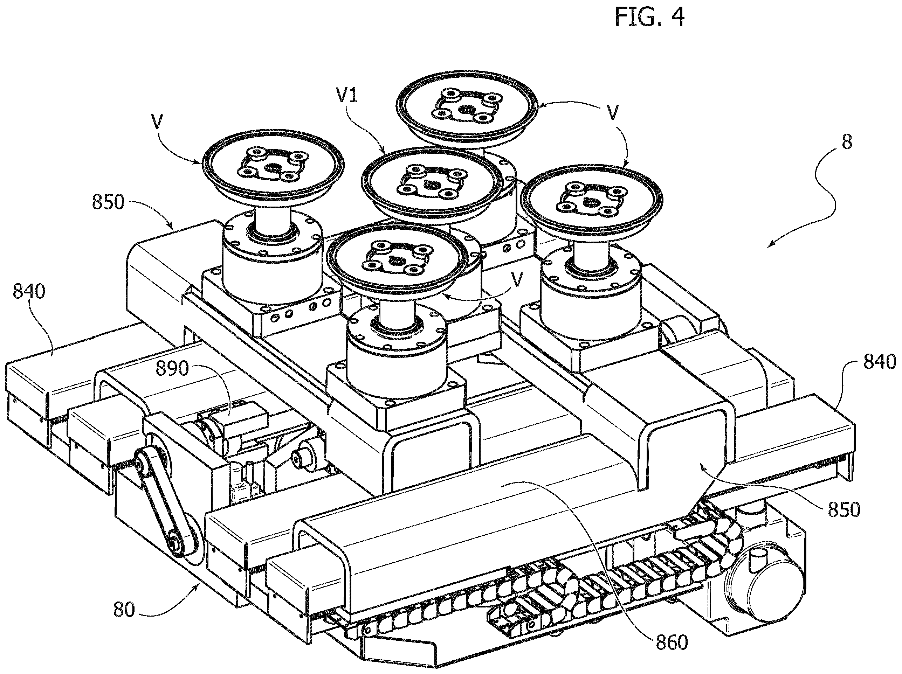

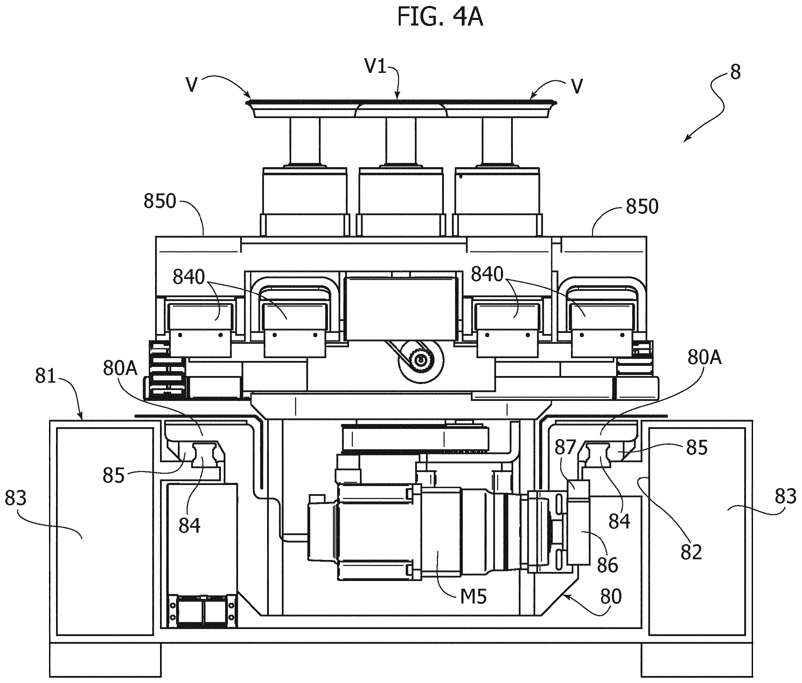

In order to overcome the aforesaid problems, in the work centre according to the invention the suction-cup units that serve to block the plate in the working area A are carried by a carriage 8 that is movable, by means of an electric motor M5 (Figures 1A and 4A) controlled by the electronic controller E, in a horizontal direction (in the example illustrated in the direction X) between a working position inside the working area A (see Figure 7) and a position for loading and unloading the plate, which is in a loading and unloading area LS outside the working area A.

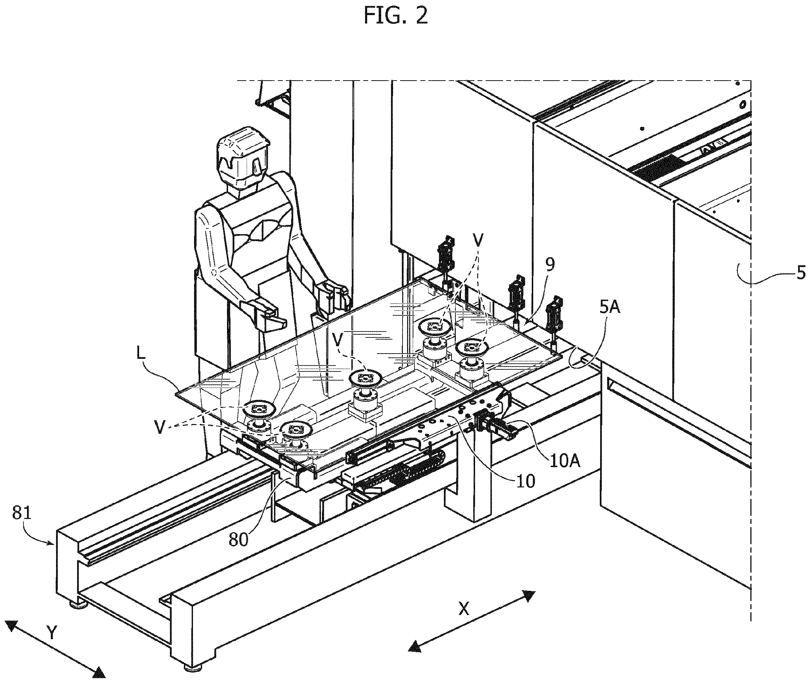

According to the invention,
the loading and unloading area LS is on the outside of the safety fence 5. The fence 5 has an opening 5A (clearly visible in Figure 2) for the passage of the carriage 8 and of a plate L carried thereby when the carriage moves between the working area A and the loading and unloading area LS.

With reference, in particular, to Figure 4A, in the case of the example illustrated therein, the carriage 8 has a load-bearing structure 80 slidably mounted in the direction X within a trench 82 defined by two sides 83 forming part of the stationary structure of the work centre. In the example, the two sides 83 carry two longitudinal guides 84, along which there are sliding blocks 85 fixed under two wings 80A of the load-bearing structure 80 of the carriage 8. The load-bearing structure 80 of the carriage 8 has in cross section a profile shaped like an upturned omega in such a way as to define the two lateral wings 80A and a lowered central portion that carries the servo-controlled electric motor M5. The latter is designed to govern in rotation a pinion 86 that meshes with a toothing 87 carried by one of the two sides 83. Rotation of the pinion 86 consequently causes movement of the carriage 8 along the guides 84.

The example illustrated shows the case where just one loading and unloading area LS is provided, which serves both for loading a plate L onto the carriage 8 and for unloading a plate L off the carriage 8.

As already mentioned previously, it is also possible to provide two areas for loading and unloading of the plates at the two sides of the work centre 1, in which case the carriage 8 is movable between the two loading and unloading areas and through the working area A. In this way, it would be possible to load a plate to be machined in any of the two loading and unloading areas at the two sides of the work centre and then unload the machined plate once again in any of the two loading and unloading areas at the two sides of the work centre. Nor to be ruled out is the case where the work centre is set along a production line so that a plate to be machined is always loaded in the loading area on the side upstream of the work centre (with reference to the direction of advance of the plate along the line) and is always unloaded in an unloading area downstream of the work centre.

It is also possible to envisage two carriages that carry the suction-cup units and are mobile in the aforesaid horizontal direction, one carriage between one of the two loading and unloading areas and the working area and the other carriage between the other loading and unloading area and the working area, so that, while one of the two carriages is in the working area for machining the plate carried thereon, the other carriage is in its loading and unloading position for unloading a plate previously machined or for loading a plate to be machined.

To return to the example illustrated in the annexed drawings, in the work centre according to the invention, a plate L to be machined can be loaded on the suction-cup units carried by the carriage 8 when the carriage 8 is in its loading position external to the fence 5 in the loading and unloading area LS.

Once the plate L has been positioned on the suction-cup units V (in the way that will be described in detail in what follows), it can be blocked on the carriage 8 by activating the suction-cup units V. The plate L can then be brought into the working area A by movement of the carriage 8 into its working position within the working area A in such a way that the plate L remains blocked, by means of the suction-cup units V, in the working area while the machining head H carries out a machining cycle on the peripheral edge of the plate L, according to a preset program that is implemented by the electronic controller E as a function of the information received by the controller E on the shape and dimensions of the plate L and on the desired type of machining.

When the machining is completed, the plate L can once again be brought into the loading and unloading position LS on the outside of the fence 5 by movement of the carriage 8 so as to enable then removal of the machined plate L, after prior deactivation of the suction-cup units V.

Preferably, the suction-cup units V are also each mobile in a vertical direction Z between a raised, active, position of engagement of the surface of the plate and a lowered, inoperative, position. Thanks to this characteristic, it is also possible that one or more suction-cup units will withhold a portion of plate constituting machining waste following upon machining in the working area and will separate the waste from the remaining portion of the plate by means of a movement of lowering of the suction-cup units that carry the waste.

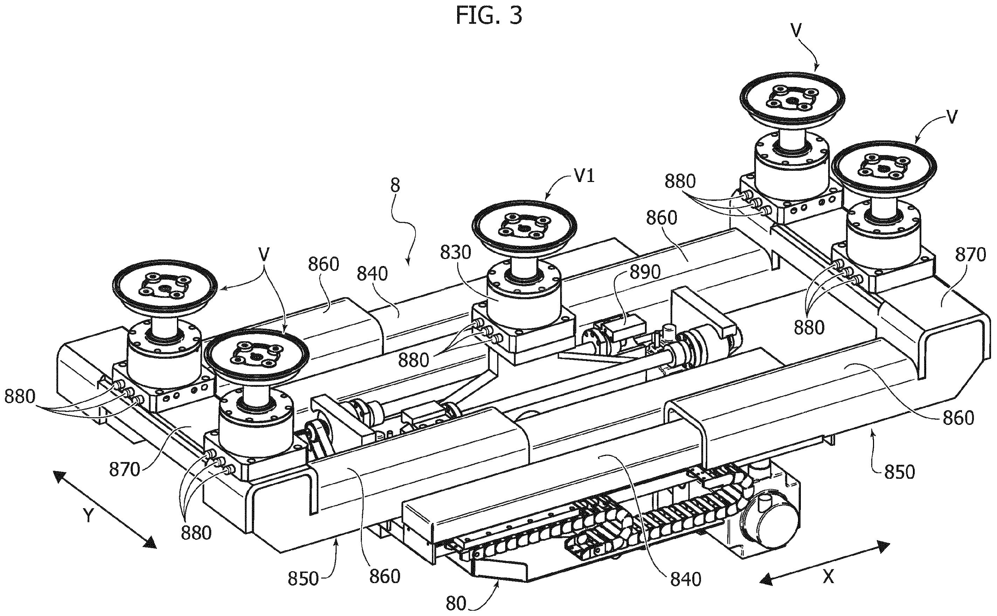

With reference, in particular, to Figures 3 and 4, an important characteristic of the work centre according to the invention lies in the fact that the arrangement of the suction-cup units V on the carriage 8 can be adjusted in an automated way, thanks to the fact that at least some of the suction-cup units are carried by mobile supports controlled by actuators.

To return to Figures 3 and 4, in the specific example illustrated the carriage 8 comprises a central support 830 that carries in a fixed position a central suction-cup unit V1. At the two sides of the central support 830, the load-bearing structure 80 of the carriage 8 carries two guides 840 parallel to the direction X, slidably mounted on which are two slides 850 that carry two respective pairs of suction-cup units V. Each slide 850 comprises two longitudinal beams 860 joined together by a cross-member 870, mounted on which are the suction-cup units V, which are aligned in the direction Y.

The movement of the slides 850 on the guides 840 is governed by two actuators 890, which are set between the slides 850 and include, in the example, electric servo-motors, which are controlled by the controller E and drive male-screw/female-screw systems.

The two slides 850 can thus be moved between a position of maximum distancing between the slides (illustrated in Figure 3) and a position of maximum approach (illustrated in Figure 4). Activation of the actuators 890 enables movement of the suction cups V in a direction X according to the shape and size of the workpiece.

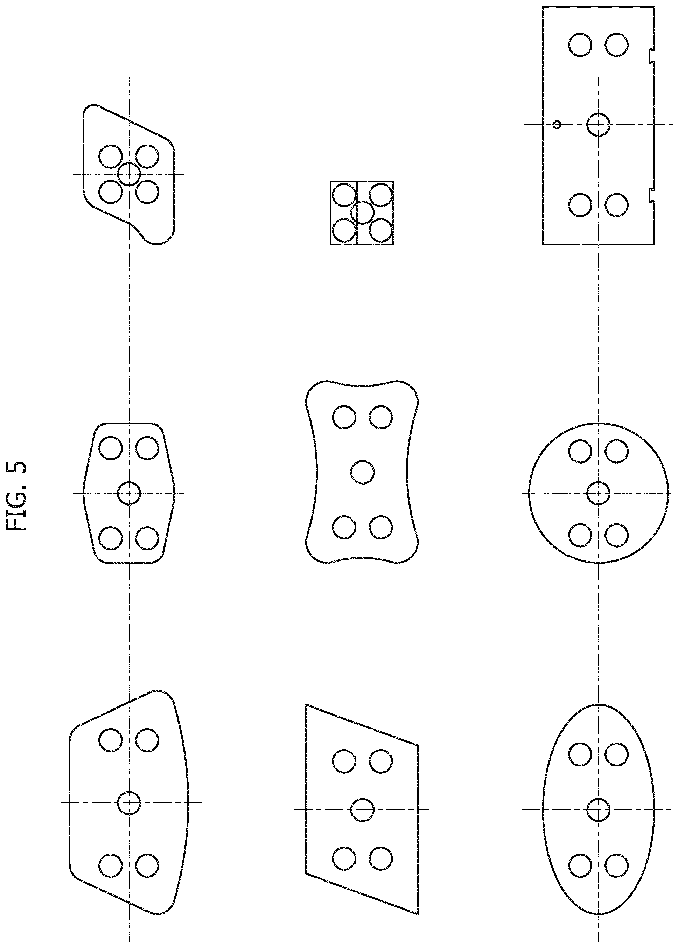

Figure 5 shows different arrangements of the suction-cup units V of the carriage 8 that can be used for different shapes and dimensions of the plates to be machined. Figure 5 highlights the fact that plates that are even very different from one another, both as regards shape and as regards dimensions, can be stably supported, for example with just five suction-cup units, which include a central suction-cup unit that remains in a fixed position on the carriage 8 and two pairs of suction-cup units that can be set at different distances apart in the direction X.

As already mentioned, the suction-cup units carried by the carriage 8 may be of the type that can be moved vertically between a lowered, inoperative, position and a raised, operative, position. In this way, the suction-cup units that are brought into the raised operative position may be just some of the suction-cup units carried by the carriage, which are selected as a function of the shape and dimensions of the plate.

Alternatively, one or more suction-cup units may be brought into the operative position for supporting a machining waste and may subsequently be lowered to separate the waste portion from the remaining part of the plate and enable machining of the inner profile of the plate that is created following upon removal of the waste.

Figures 6 and 7 show the work centre in top plan view, with the carriage 8 and a plate L carried by the carriage 8, respectively in the loading position in the loading area LS and in the working position in the working area A.

As already mentioned, the information on the shape and dimensions of the plate L can be supplied by the operator to the electronic controller E by means of the interface 7. Also the information on the position of the plate in the reference system X, Y, Z has to be learnt by the controller E. For this purpose, when the plate L is loaded onto the suction-cup units V of the carriage 8 in the loading and unloading area LS, the operator rests the plate L on the suction-cup units V and slides it over them (in this step, the suction-cup units V are deactivated) until the plate is brought into contact with at least one first locator element 9 for locating in position the plate in the direction X and with at least one second locator element 10 for locating in position the plate in the direction Y.

In the example illustrated (see Figures 2 and 6), the plate is located in position in the direction X by bringing it into contact with a plurality of first locator elements 9 (which, in the example, are carried by a rigid structure forming part of the stationary structure of the work centre). Locating in position in the direction Y is obtained, instead, by bringing the plate into contact with a single locator element 10 having an elongated conformation. Also for positioning of the plate in the direction X it is possible to use a single locator element instead of the locator elements 9. In this case, the aforesaid single locator element may be mobile in the direction Z.

In one example, the electronic controller E is configured to adjust both the position of the second locator element 10 in the second horizontal direction Y and the position of the carriage 8 in said loading area LS in the first horizontal direction X in such a way that, when the plate L is positioned on the suction-cup units V of the carriage 8 and is brought up against the first locator element 9 and the second locator element 10, the centre of the plate is substantially positioned at the centre of the carriage 8.

Once the plate L has been rested on the suction-cup units V and brought into contact with the locator elements 9 and 10, the suction-cup units V are activated so as to block the plate L on the carriage 8.

Of course, as already mentioned above, prior to depositing of the plate L, the electronic controller E automatically arranges the suction-cup units V of the carriage 8 in the most suitable position, taking into account the shape and dimensions of the plate.

Consequently, whenever a new plate is to be machined, the operator, via the interface 7, supplies to the controller E the information on the shape and dimensions of the plate. On the basis of this information, the controller E adjusts the position of the mobile suction-cup units V and adjusts also the position of the carriage 8 and of the locator element 10. Once these operations have been carried out, the operator can lay the plate L down on the suction-cup units V of the carriage 8 and then enable activation of the suction-cup units. Once this operation has been carried out, the electronic controller E can issue a command for movement of the carriage 8 into the working area of the work centre. This movement is controlled by the electronic controller E, which is hence able to acquire the information regarding the final position of the plate L in the working area. Consequently, the controller E itself is able to govern in a correct and precise way the movements of the machining head H with respect to the plate L in order to execute a programmed cycle of operations of machining of the peripheral edge of the plate.

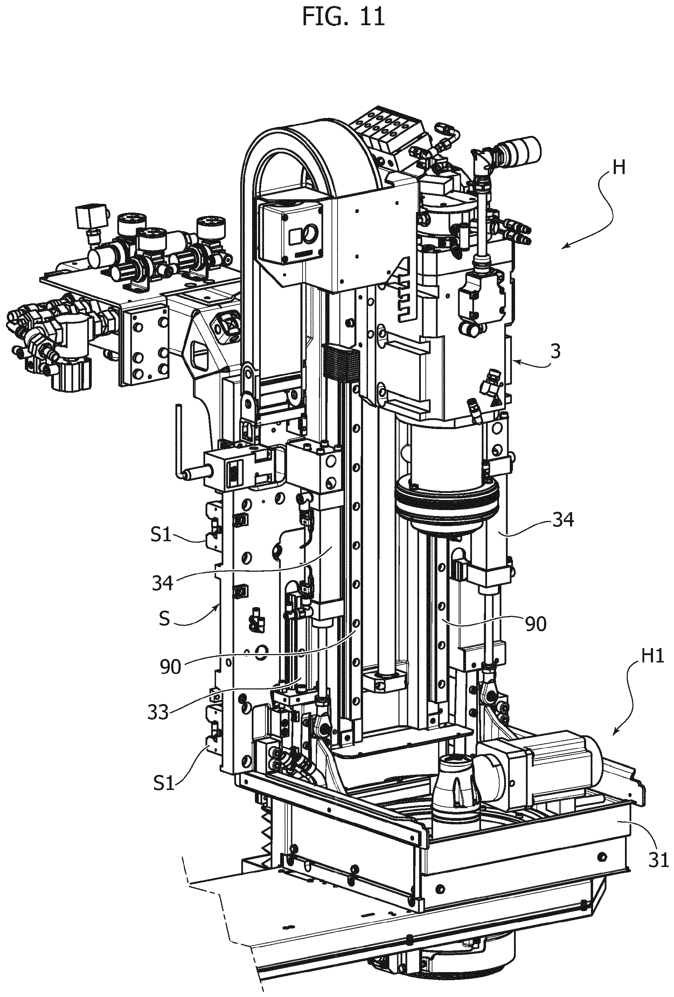

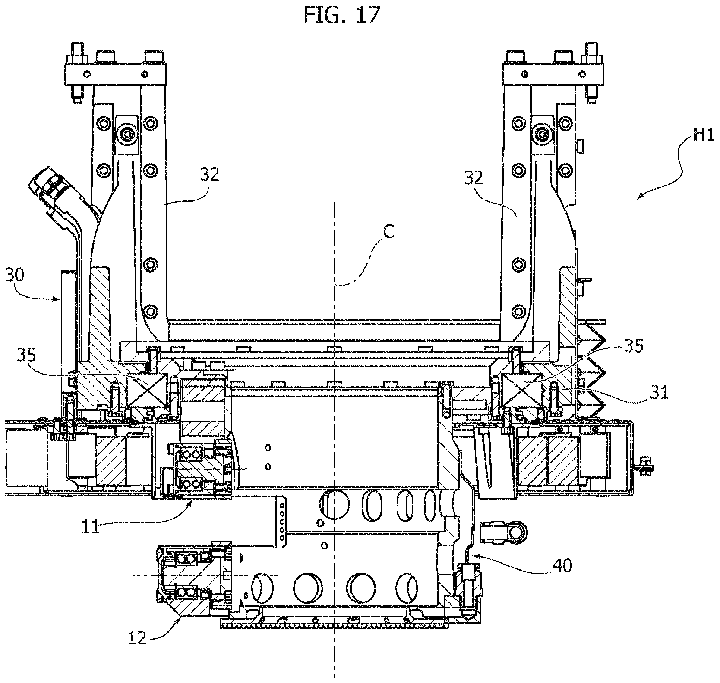

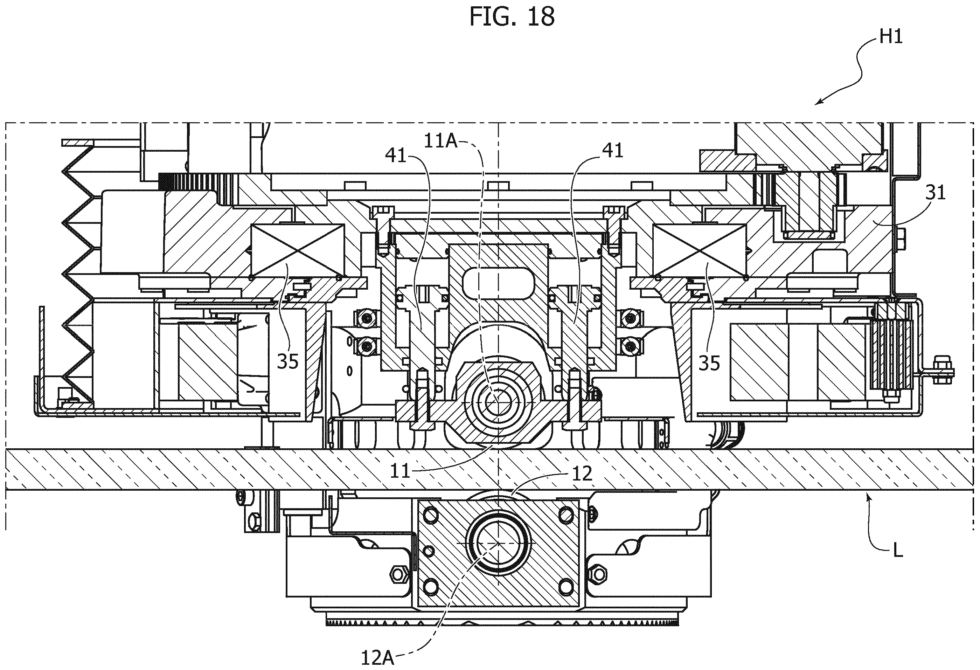

Figures 11-18 illustrate a further important aspect of the present invention. These figures refer to a preferred example of embodiment, where the machining head H is provided with an auxiliary unit H1 for supporting the plate, which comprises a pair of freely rotatable wheels 11, 12 that are designed to engage the opposite faces of the plate L in the working area A while the machining head H moves along the peripheral edge of the plate L.

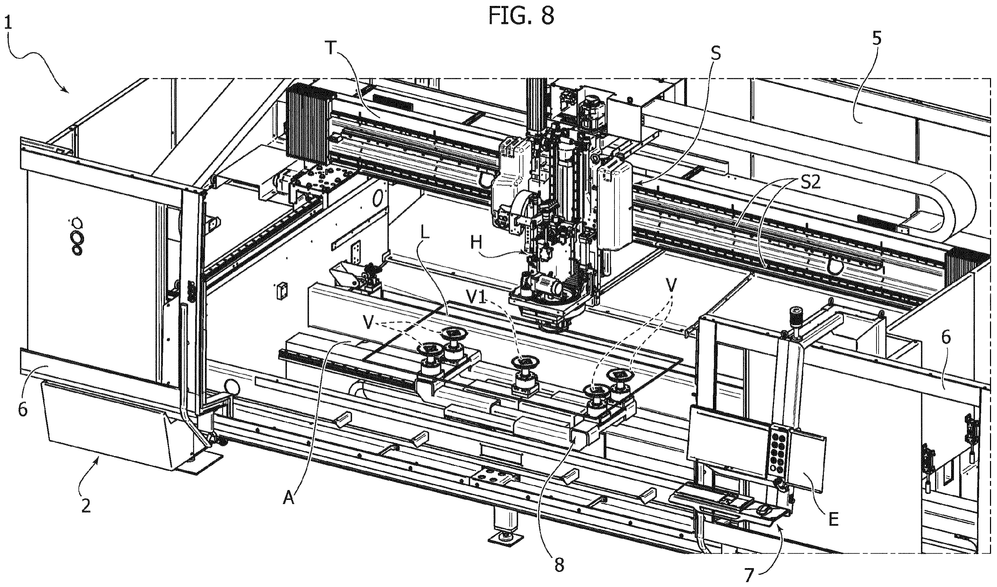

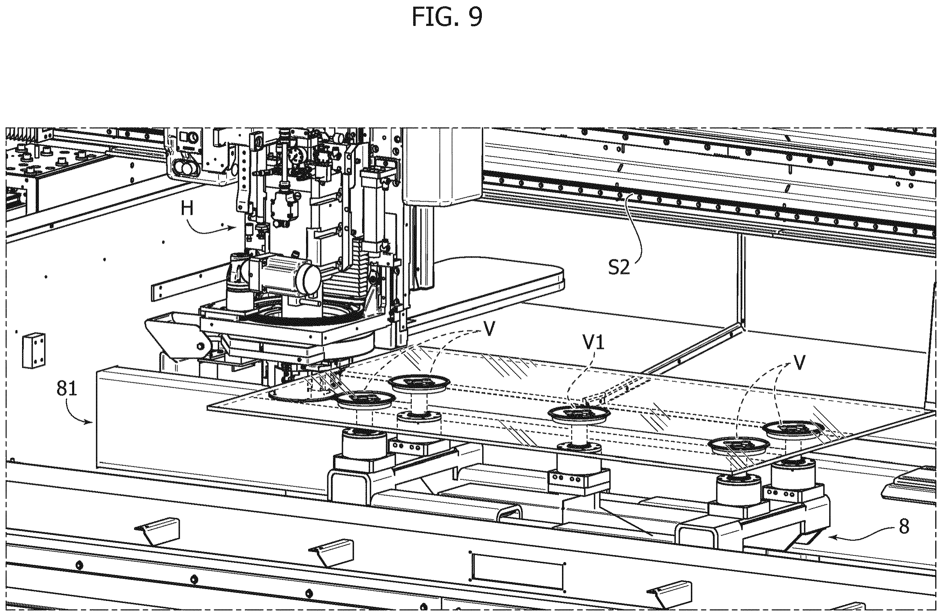

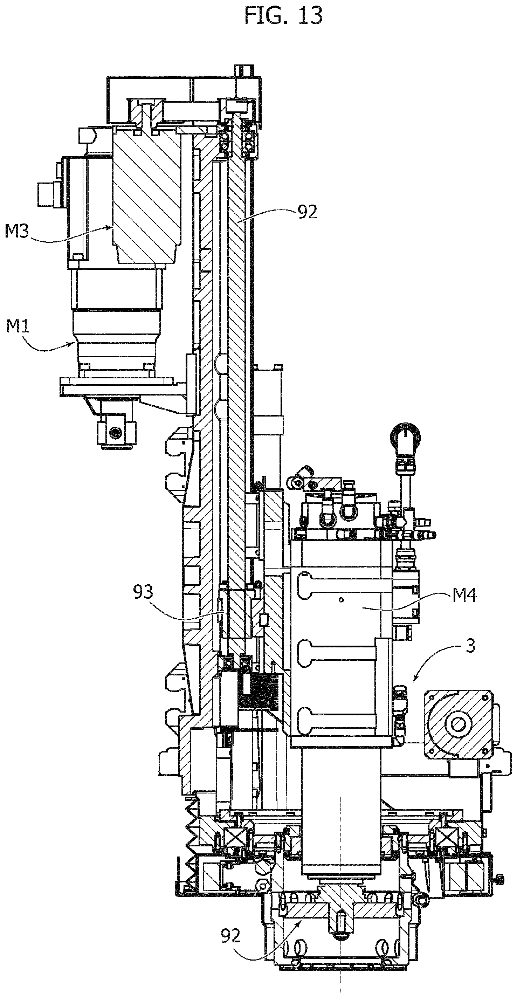

With reference, in particular, to Figures 12 and 13, the spindle unit 3 is mounted vertically mobile on the supporting slide S, which has sliding blocks S1 slidably mounted on guides S2 (visible in Figures 8 to 10) carried by a face of the beam T. The movement of the slide S in the direction X, along the beam T is governed in a way in itself conventional by the electric motor M1 (Figures 12 and 13), which is carried by the structure of the slide S and drives in rotation a pinion that meshes with a toothing carried by the beam T.

The spindle unit 3 is guided in a slidable way in the vertical direction Z on guides 90 (Figure 11) carried by the slide S. The movement of the spindle unit 3 in the vertical direction Z is governed by an electric motor M3 carried by the structure of the slide S (see Figures 12 and 13), which, via a cogged-belt transmission 91 drives in rotation a vertical screw 92 engaged through a female screw 93. The female screw 93 is rigidly connected to the structure of the spindle unit 3 and is consequently prevented from rotating. Rotation of the screw 92 driven by the electric motor M3 hence brings about vertical movement, in one direction or the other, of the spindle unit 3.

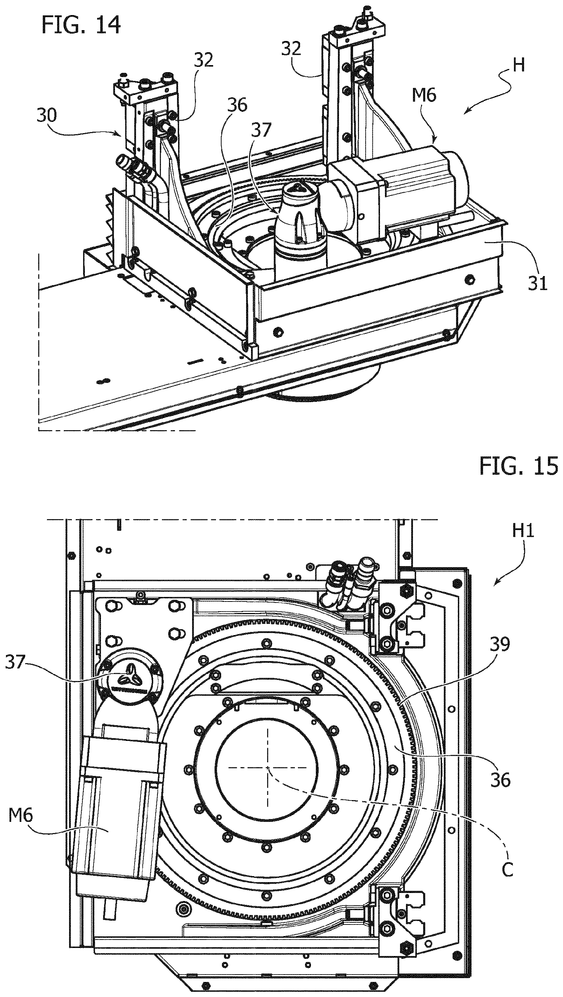

Once again with reference to Figures 11-18, the auxiliary unit H1 for supporting the plate has a supporting structure 30 (see, for example, Figure 14), which includes a horizontal table 31 and two rear uprights 32 that are slidably mounted on two vertical guides 33 (just one of which is visible in Figure 11) carried by the slide S.

In this way, the auxiliary unit H1 for supporting the plate is mounted vertically mobile on the supporting slide S, independently of the spindle unit 3, underneath the spindle unit 3 (see Figure 11).

The vertical movements of the auxiliary unit H1 are driven by an actuator of any known type. In the example, this actuator comprises two pneumatic cylinders 34, which are carried by the slide S and have their stems connected to the structure 30 of the auxiliary unit H1.

The horizontal table 31 forming part of the supporting structure 30 of the auxiliary unit H1 has a circular opening with vertical axis, rotatably mounted within which, by means of a bearing 35, is an annular structure 36.

The annular structure 36 is rotatably mounted, underneath the spindle unit 3, about a vertical axis C that preferably coincides with the vertical axis of the spindle 4.

Rotation of the annular structure 36 about the axis C is driven by a servo-controlled electric motor M6 carried by the table 31 that forms part of the supporting structure 30 of the auxiliary unit H1. In the example illustrated (Figures 14 and 15), the motor M6 is set horizontally and governs, via a transmission 37, a vertical-axis pinion 38 that meshes with a ring gear 39 carried by the rotatable annular structure 36.

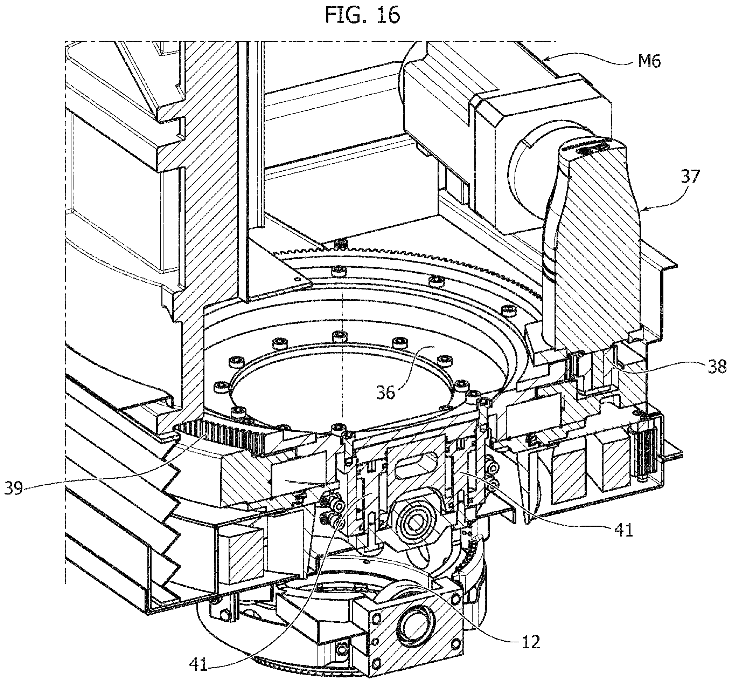

The rotatable structure 36 of the auxiliary unit H1 carries a pair of wheels 11, 12 (Figures 16-18) mounted rotatably about two horizontal axes 11A, 12A vertically aligned and set at a distance apart.

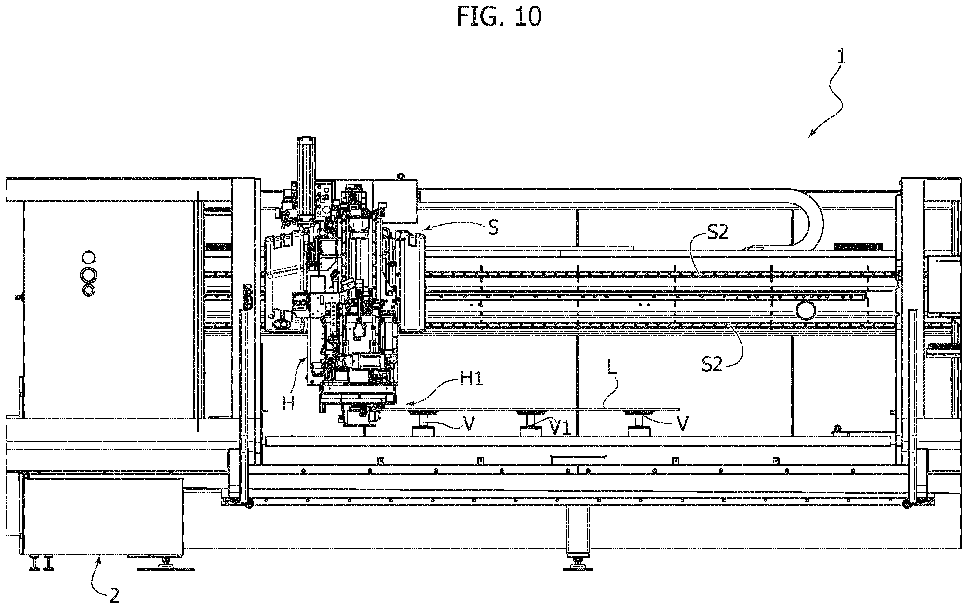

The bottom wheel 12 is carried by a peripheral portion of a tubular body 40 fixed to the rotatable structure 36. With reference also to Figures 12 and 13, the tubular body 40 receives the grinding wheel G within it, when the spindle unit is in its lowered position through the auxiliary unit H1 (see Figure 13). In this condition, the grinding wheel projects through a window provided in the wall of the tubular body 40 and is consequently able to engage the edge of a plate to be machined (Figure 10).

The top wheel 11 is carried in a vertically adjustable position by a peripheral portion of the rotatable annular structure 36. With reference, in particular, to Figure 16, in the example illustrated, the top wheel 11 is rotatably mounted on a support that is vertically movable by means of two pneumatic cylinders 41.

The electronic controller E is configured to control rotation of the rotatable annular structure 36 that carries the wheels 11, 12, by means of the motor M6, in such a way as to maintain the axes of said wheels substantially orthogonal to the peripheral edge of the plate during movement of the machining head H along the peripheral edge of the plate.

The spindle unit 3 is vertically movable, via the motor M3 (Figures 12 and 13), between a raised, inoperative, position, set at a distance above the auxiliary plate-supporting unit (Figure 12), where it is possible to carry out an operation of tool change, and a lowered, operative, position, where the spindle unit is inserted through said rotatable annular structure 36 and through the tubular body 40, in a position where the tool carried by said spindle is able to engage the edge of a plate to be machined.

Thanks to the arrangement described above, during machining in the working area A, the plate L is held rigidly in a fixed horizontal position, not only via the suction-cup units V of the carriage 8, but also via the pair of wheels 11, 12 carried by the machining head H, which grip between them the plate L while they roll over its two opposite faces, following upon the movement of the machining head H along the peripheral edge of the plate.

Consequently, the number of the suction-cup units may be considerably reduced, and the suction-cup units may be arranged in positions relatively closer to the centre of the plate as compared with what it is possible to do with conventional work centres, with the advantage that it may frequently happen that one and the same arrangement of the suction-cup units can be used for plates of different shapes and/or dimensions. As already mentioned, Figure 5 shows different arrangements of the suction-cup units V of the work centre according to the invention, in the example that envisages a single fixed central suction-cup unit and two pairs of suction-cup units that can be positioned symmetrically in the direction X at different distances from the central suction-cup unit.

Figure 5 also shows that, in the presence of plates having different shapes and dimensions, with translation alone of four suction cups in the direction X (except for the central suction cup, which is fixed), it is possible to block the above plates stably in position.

The work centre according to the invention may also be easily adapted to operating in a conventional way by eliminating the carriage 8 and blocking the plate L to be machined with conventional suction-cup units, prearranged on the working surface of the machine.

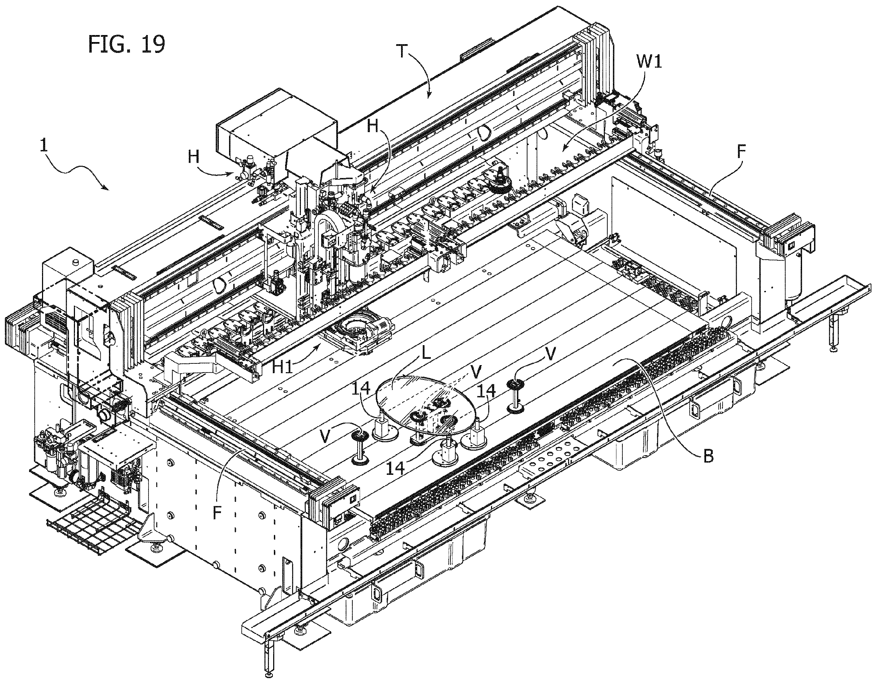

Figure 19 shows a work centre thus transformed, in which a plate L is blocked above and at a distance from the surface B of the machine by means of conventional suction-cup units V that each have a bottom suction cup that can be blocked on the surface B and a top suction cup that is designed to engage the underface of the plate L. In this case, the plate L is located in position in a conventional way, by means of locator members 14, each provided with a bottom suction cup that can be blocked on the surface B.

Also in this configuration, the work centre preserves the characteristic of a machining head with a vertical axis C, about which the pair of wheels 11, 12 are oriented for engaging the plate. Consequently, also in this case, the number of the suction-cup units necessary for blocking the plate may be reduced accordingly.

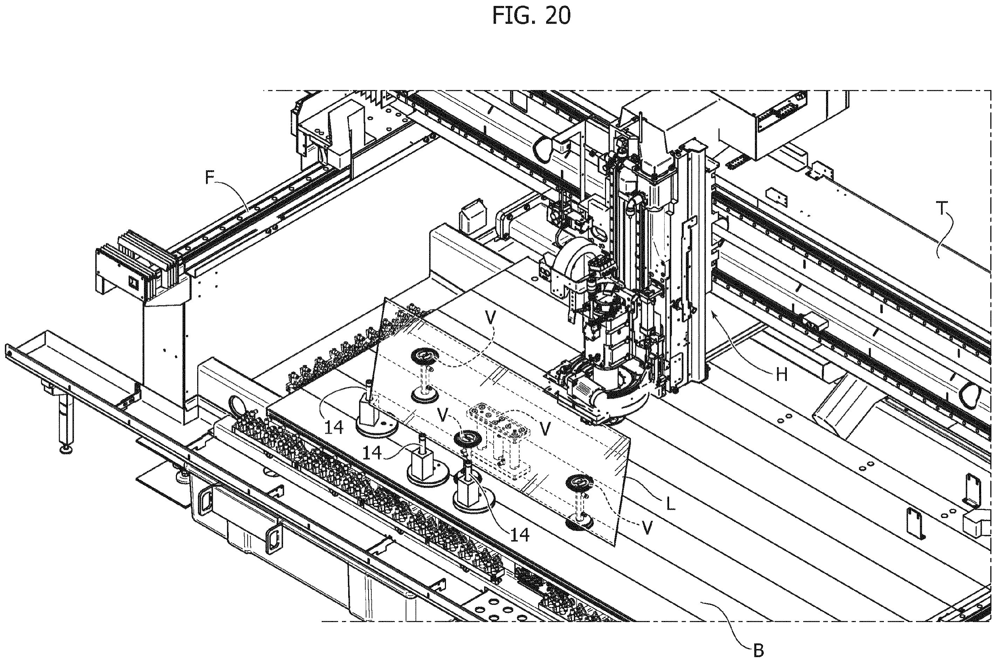

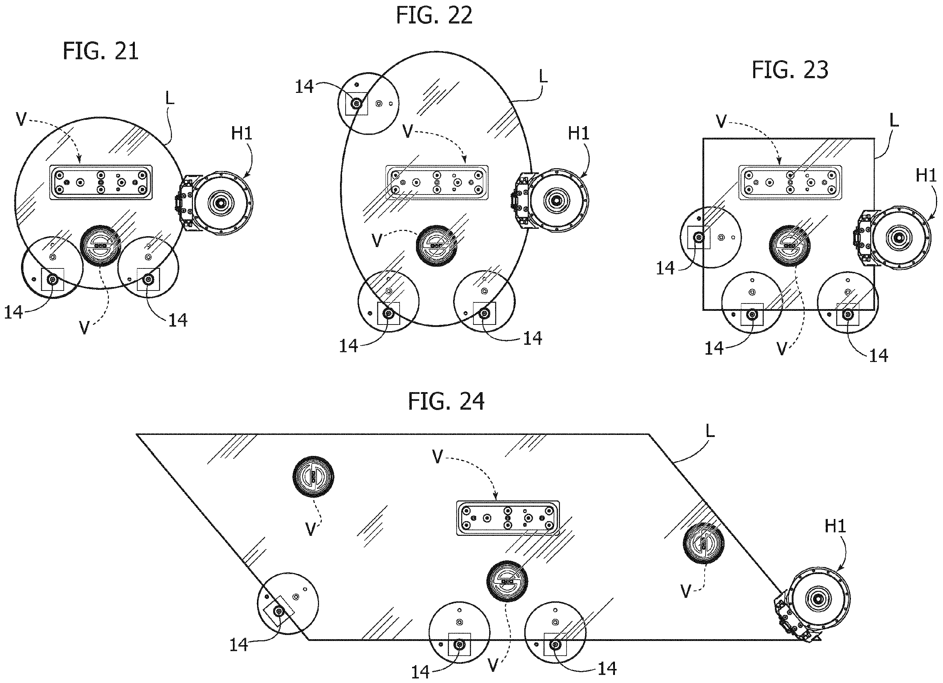

Figure 19 shows the example of a plate L having an elliptical shape blocked by means of a circular suction cup and a suction cup having an elongated conformation. Figure 20 shows a quadrangular plate, blocked by means of an elongated suction cup and three circular suction cups. Figures 21-24 show different plate configurations blocked with different suction-unit arrangements. These figures highlight the fact that, thanks to the operating head equipped with wheels for gripping the edge of a plate, the number of suction-cup units that it is necessary to block the plate stably is reduced as compared to the situation in conventional machines. These figures moreover show that in multiple cases it is not even necessary to change the position of the suction-cup units when the shape and/or size of the plate to be machined changes.

The work centre according to the invention may be equipped, in a way in itself known, with one or more tool magazines for automatic change of the tool carried by the machining head. In the example illustrated, a first tool magazine W1 is carried by a beam that is supported in cantilever fashion by the beam T in a position parallel to and at a distance from the beam T. This arrangement may be adopted also in the work centre of Figure 1. In a way in itself known, the beam W1 of the tool magazine W has a plurality of seats for supporting a plurality of tools. When it is necessary to carry out a tool change, the controller E governs the machining head H to deposit the tool previously used in an empty seat of the tool magazine W and pick up a new tool from another seat of the tool magazine.

A further tool magazine may be provided on the stationary structure 2 of the work centre.

In the case where the dimensions of the plate to be machined are not known, instead of locating in position the plate in the loading area against the locator elements described above, the procedure is different. In this case, the operator, or any automatic loading system, can position the plate by setting the centre of this orientatively above the centre of the carriage 8 that carries the suction cups. Following upon application of the vacuum to the suction cups, a plate-detection system is activated, which comprises one or more plate-detection devices prearranged adjacent to said loading area LS and configured to detect the dimensions and position of the plate set on the suction-cup units V and to send to the electronic controller E data indicating the aforesaid detected dimensions and position.

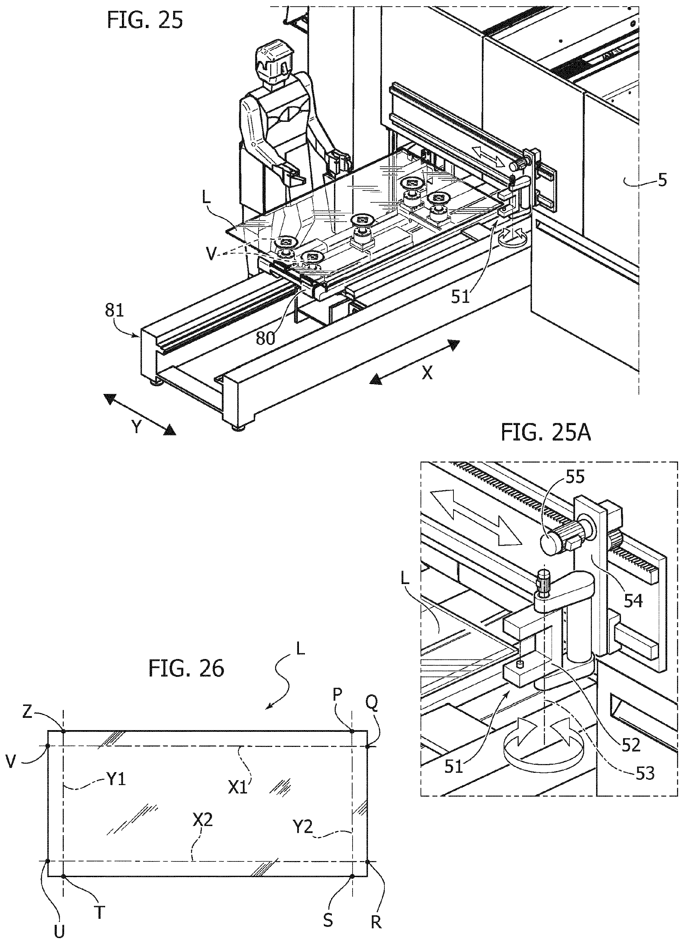

In one example, the plate-detection system comprises, adjacent to the loading area LS, an optical-detection device 51 (Figures 25 and25A), for example of the known type comprising a laser emitter and a laser receiver, which are carried at the ends of a forked support 52 and can be positioned respectively above and beneath the plate L, adjacent to an edge of the plate. The forked support 52 is orientable by means of an electric actuator about a vertical axis 53 with respect to a supporting slide 54 so as to be able to straddle a longitudinal edge or an end edge of the plate. The slide 54 that carries the detection device 51 is slidably mounted in the direction Y on the fixed structure of the machine and is movable in the direction Y by means of a servo-controlled electric motor 55.

Thanks to the above arrangement, by moving the device 51 in the direction Y, while the plate is stationary, or else by moving the plate in the direction X via the carriage 8, while the detection device 8 is stationary, it is possible to govern relative movement of the optical-detection device with respect to the plate L positioned in said loading area LS both in said longitudinal direction X, along two trajectories X1 and X2 (Figure 26) adjacent to two longitudinal edges of the plate L, and in said transverse direction Y, along two trajectories Y1 and Y2 (see once again Figure 26) adjacent to two end edges of the plate L. The device 51 is thus, for example, able to communicate to the controller E the position of the points P, Q, R, S, T, U, V, Z indicated in Figure 26, which enables the controller E to process both the dimensions of the plate and a possible deviation of the plate with respect to a position perfectly aligned in the direction X.

Of course, it is possible to envisage more than one detection device. Moreover the detection device may be of any other known type, suited to detecting plates of any material (for example, glass, stone, or synthetic materials).

Once the controller E has received the information on the dimensions of the plate and on the possible misalignment of the plate with respect to the longitudinal direction X, the controller itself may automatically adapt the program for controlling the machining head H to carry out machining of the perimetral edge of the plate.

It is also possible to envisage an automated system for loading plates onto the carriage 8 in the loading area external to the fence 5 of the work centre, for example a manipulator robot equipped with a gripper with suction cups. The same applies, of course, to unloading of the plates from the carriage 8.

Of course, without prejudice to the underlying principle of the invention, the details of construction and the embodiments may vary widely with respect to what has been illustrated herein purely by way of example, without thereby departing from the scope of the present invention, as defined in the annexed claims.

## Claims

1. A numerical-control work centre (1) for machining plates of glass or plates of natural or synthetic stone material, of the type in which a plate (L) to be processed is kept in a fixed position during working, said work centre comprising:
- a load-bearing structure (2) defining a working area (A);
- a machining head (H) that can be moved over the working area (A) according to three mutually orthogonal axes (X, Y, Z) by means of respective servo-controlled electric motors (M1, M2, M3), wherein said machining head (H) includes a spindle unit, with a spindle having a vertical axis, an electric motor for driving the spindle, and a machining tool removably connected to the spindle;
- an electronic controller (E) configured to control, according to a predetermined program, said electric motors (M1, M2, M3) that control movement of the machining head (H) and the electric motor for driving the spindle in such a way as to carry out a cycle of machining of a peripheral edge of the plate (L) that is located in the working area (A);
- a human-machine interface for supplying the electronic controller with information on the shape and/or dimensions of a plate to be machined and/or on operations to be carried out on the plate; and
- a plurality of suction-cup units (V), configured to engage the underface of a plate (L) in order to keep the plate in the working area in a fixed horizontal position, at a distance from a surface of the working area (A), in such a way that the peripheral edge of the plate (L) is free to be machined by the tool of the machining head, said suction-cup units being activatable or deactivatable by controlling a connection of the suction-cup units (V) to a negative-pressure source,
wherein
- the suction-cup units (V) for withholding the plate in the working area (A) are carried by a carriage (8) that can be moved, by means of an electric motor (M) controlled by said electronic controller (E), in a horizontal direction (X), between a working position inside the working area (A) and a position for loading of the plate (L) that is located in a loading area (LS) ; and
- at least some of the suction-cup units (V) are carried by said carriage (8) by means of mobile supports, which can be driven by means of one or more actuators carried by the carriage (8) and controlled by said electronic controller (E) in such a way that the arrangement in a horizontal plane of the suction-cup units (V) on said carriage (8) is adjusted by said electronic controller (E) on the basis of the information acquired by the electronic controller (E) on the shape and dimensions of the plate,
in such a way that:
- a plate (L) to be machined can be rested on the suction-cup units (V) carried by said carriage (8) when the carriage is in its loading position in said loading area (LS) outside the working area, if necessary after the position of the suction-cup units (V) on the carriage (8) has been adjusted, by means of said electronic controller (E), as a function of the size and shape of the plate;
- said plate (L) can be blocked on said carriage (8) by activation of the suction-cup units (V); and
- the plate (L) can then be brought into the working area (A), via movement of the carriage (8) up to a position within the working area (A), in such a way that the plate (L) remains blocked, by means of the suction-cup units (V), in said position in the working area (A) while the machining head (H) carries out a machining cycle on the peripheral edge of the plate,
the work center (1) being **characterized in that**
the loading area (LS) is outside the working area (A) on the outside of a fence surrounding the working area (A).

2. The work centre according to claim 1, **characterized in that** in said loading area (LS) said work centre has a stationary structure that carries a first locator element (9), for locating in position the plate (L) in a first horizontal reference direction (X), and a second locator element (10), for locating in position the plate (L) in a second horizontal reference direction (Y), orthogonal to the first horizontal reference direction (X),
at least one of said locator elements (9, 10) being adjustable in position in the respective horizontal reference direction,
so that, when the carriage (8) is in the aforesaid loading area (LS), a plate (L) can be positioned on the suction-cup units (V) of the aforesaid carriage (8), with the suction-cup units (V) deactivated, and can then be brought up against both the first locator element (9) and the second locator element (10) in order to locate in position the plate (L) in said horizontal reference directions (X, Y), after which the suction-cup units can be activated to block the plate (L) on the carriage (8).

3. The work centre according to claim 2, **characterized in that** said first horizontal reference direction (X) of the plate is parallel to the direction (X) of movement of the carriage (8) and said second horizontal direction (Y) is orthogonal to the direction (X) of movement of the carriage (8).

4. The work centre according to claim 3, **characterized in that** the first locator element (9) for locating in position the plate (L) in the first horizontal reference direction (X) is in a fixed position, while the second locator element (10) for locating in position the plate (L) in the second horizontal reference direction (Y) can be adjusted in position in said second horizontal reference direction (Y).

5. The work centre according to claim 4, **characterized in that** said electronic controller (E) is configured to receive information on the position of said first locator element (9) and said second locator element (10) and consequently to acquire the position of the plate (L) once the plate (L) has been positioned on the suction-cup units (V) of the carriage (8) in said loading area (LS) and has been brought up against the first locator element (9) and the second locator element (10), in such a way that, when the electronic controller (E) issues a command for movement of the carriage (8) into the working area, said electronic controller (E) is also able to determine the final position reached by the plate (L) in the working area.

6. The work centre according to claim 5, **characterized in that** the electronic controller (E) is configured to adjust the position of said second locator element (10) in the second horizontal reference direction (Y) and to adjust the position of the carriage (8) in said loading area (LS) in the first horizontal direction (X), on the basis of the information on shape and dimensions of the plate, in such a way that when the plate (L) is positioned on the suction-cup units (V) of the carriage (8) in the loading area (LS) and is brought up against the first locator element (9) and the second locator element (10), the plate will be located in a preset position with respect to the carriage (8).

7. The work centre according to claim 1, **characterized in that** the suction-cup units (V) are also each mobile in a vertical direction Z, between a raised, active, position of engagement of the surface of the plate (L) and a lowered, inoperative, position so that one or more suction-cup units (V) are able to withhold a portion of plate constituting machining waste following upon machining in the working area and to separate the waste from the remaining portion of the plate by means of a movement of lowering of the suction-cup units (V) that carry the waste.

8. The work centre according to claim 1, **characterized in that** adjacent to said loading area (LS) one or more plate-detection devices are prearranged, configured to detect dimensions and position of a plate set on said suction-cup units (V) carried by the carriage (8) and to send to said electronic controller (E) data indicating said dimensions and position detected.

9. The work centre according to claim 8, **characterized in that** it comprises, adjacent to the loading area (LS), an optical-detection device that can be moved by means of a servo-controlled electric motor in a direction (Y) transverse to the longitudinal direction (X) of movement of said carriage (8).

10. The work centre according to claim 9, **characterized in that** said electronic controller (E) is configured to control a relative movement of the optical-detection device with respect to a plate (L) positioned in said loading area (LS) both in said longitudinal direction (X), along two trajectories adjacent to two longitudinal edges of the plate (L), and in said transverse direction (Y) along two trajectories, adjacent to two end edges of the plate (L).

11. A method for machining plates of glass or plates of natural or synthetic stone material comprising:
- supplying to an electronic controller information on the shape and/or dimensions of a plate to be machined and/or on operations to be carried out on the plate;
- moving a machining head (H) over a working area (A) according to three mutually orthogonal axes (X, Y, Z) by means of respective electric motors controlled (M1, M2, M3) by said electronic controller according to a preset program in such a way as to carry out a cycle of machining of a peripheral edge of a plate (L) that is located in the working area (A);
- during execution of the machining cycle, keeping the plate in the working area in a fixed horizontal position, at a distance from a surface of the working area (A), engaging the underface of the plate (L) with a plurality of suction-cup units (V) in such a way that the peripheral edge of the plate (L) is free to be machined by the machining head, said suction-cup units being activatable or deactivatable by controlling a connection of the suction-cup units (V) to a negative-pressure source,
wherein
- the suction-cup units (V) that withhold the plate in the working area (A) are carried by a carriage (8) that is moved, by means of an electric motor (M) controlled by said electronic controller (E), in a horizontal direction (X), between a working position inside the working area (A) and a position for loading of the plate (L) that is located in a loading area (LS) ; and
- at least some of the suction-cup units (V) are carried by said carriage (8) by means of mobile supports, which can be driven by means of one or more actuators carried by the carriage (8) and controlled by said electronic controller (E) in such a way that the arrangement in a horizontal plane of the suction-cup units (V) on said carriage (8) is adjusted by said electronic controller (E) on the basis of the information, acquired by the electronic controller (E), on the shape and dimensions of the plate,
in such a way that:
- a plate (L) to be machined is rested on the suction-cup units (V) carried by said carriage (8) when the carriage is in its loading position in said loading area (LS) outside the working area, if necessary after the position of the suction-cup units (V) on the carriage (8) has been adjusted, by means of said electronic controller (E), on the basis of the information on the size and/or shape of the plate,
- said plate (L) is blocked on said carriage (8) by activation of the suction-cup units (V), and
- the plate (L) is then carried into the working area (A), via movement of the carriage (8) up to a position within the working area (A), in such a way that the plate (L) remains blocked, by means of the suction-cup units (V), in said position in the working area (A) while the machining head (H) carries out a machining cycle on the peripheral edge of the plate,
**characterized in that**
the loading area (LS) is outside the working area (A) on the outside of a fence surrounding the working area (A).

12. The method according to claim 11, **characterized in that** in said loading area (LS) a stationary structure carries a first locator element (9), for locating in position the plate in a first horizontal reference direction (X), and a second locator element (10), for locating in position the plate (L) in a second horizontal reference direction (Y), orthogonal to the first horizontal reference direction (X),
at least one of said locator elements (9, 10) being adjustable in position in the respective horizontal reference direction,
so that when the carriage (8) is in the aforesaid loading area (LS), a plate (L) is positioned on the suction-cup units (V) of the aforesaid carriage (8), with the suction-cup units (V) deactivated, and is then brought up against both the first locator element (9) and the second locator element (10) in order to locate in position the plate (L) in said horizontal reference directions (X, Y), after which the suction-cup units are activated to block the plate (L) on the carriage (8).

13. The method according to claim 12, **characterized in that** said first horizontal reference direction (X) of the plate is parallel to the direction (X) of movement of the carriage (8), and said second horizontal reference direction (Y) is orthogonal to the direction (X) of movement of the carriage (8).

14. The method according to claim 13, **characterized in that** said electronic controller (E) receives information on the position of said first locator element (9) and of said second locator element (10) and consequently acquires the position of the plate (L) once the plate (L) has been positioned on the suction-cup units (V) of the carriage (8) in said loading area (LS) and has been brought up against the first locator element (9) and the second locator element (10),
after which the electronic controller (E) issues a command for movement of the carriage (8) into the working area, consequently determining the final position reached by the plate (L) in the working area.

15. The method according to claim 14, **characterized in that**, on the basis of the information on shape and dimensions of the plate, the electronic controller (E) adjusts, via an actuator, the position of said second locator element (10) in the second horizontal reference direction (Y) and, via an electric motor for driving the carriage (8), the electronic controller (E) adjusts the position of the carriage (8) in said loading area (LS) in the first horizontal direction (X) in such a way that, when the plate (L) is positioned on the suction-cup units (V) of the carriage (8) in the loading area (LS) and is brought up against the first locator element (9) and the second locator element (10), the plate will be located in a preset position with respect to the carriage (8).

## Patentansprüche

1. Numerisch gesteuertes Arbeitszentrum (1) zur Bearbeitung von Platten aus Glas oder Platten aus Natur- oder Kunststeinmaterial, von der Art, in der eine zu bearbeitende Platte (L) während der Arbeit in einer fixierten Position gehalten wird, wobei das Arbeitszentrum Folgendes umfasst:
- eine lasttragende Struktur (2), die einen Arbeitsbereich (A) definiert;
- einen Bearbeitungskopf (H), der gemäß drei zueinander orthogonalen Achsen (X, Y, Z) mittels jeweiliger servo-gesteuerter Elektromotoren (M1, M2, M3) über den Arbeitsbereich (A) bewegt werden kann, wobei der Bearbeitungskopf (H) eine Spindeleinheit mit einer Spindel mit einer vertikalen Achse, einen Elektromotor zum Antreiben der Spindel und ein entfernbar mit der Spindel verbundenes Bearbeitungswerkzeug umfasst;
- eine elektronische Steuerung (E), die dazu ausgelegt ist, gemäß einem vorbestimmten Programm die Elektromotoren (M1, M2, M3), die die Bewegung des Bearbeitungskopfs (H) steuern, und den Elektromotor zum Antreiben der Spindel derart zu steuern, dass ein Bearbeitungszyklus einer Umfangskante der Platte (L), die sich in dem Arbeitsbereich (A) befindet, ausgeführt wird;
- eine Mensch-Maschine-Schnittstelle zum Versorgen der elektronischen Steuerung mit Informationen über die Form und/oder Abmessungen einer zu bearbeitenden Platte und/oder über an der Platte auszuführende Vorgänge; und
- eine Mehrzahl von Saugnapfeinheiten (V), die dazu ausgelegt sind, die untere Fläche einer Platte (L) in Eingriff zu nehmen, um die Platte in dem Arbeitsbereich in einer fixierten horizontalen Position in einem Abstand von einer Oberfläche des Arbeitsbereichs (A) derart zu halten, dass die Umfangskante der Platte (L) frei ist, um durch das Werkzeug des Bearbeitungskopfs bearbeitet zu werden, wobei die Saugnapfeinheiten durch Steuern einer Verbindung der Saugnapfeinheiten (V) mit einer Unterdruckquelle aktivierbar und deaktivierbar sind, wobei
- die Saugnapfeinheiten (V) zum Zurückhalten der Platte in dem Arbeitsbereich (A) von einem Wagen (8) getragen sind, der mittels eines von der elektronischen Steuerung (E) gesteuerten Elektromotors (M) in einer horizontalen Richtung (X) zwischen einer Arbeitsposition innerhalb des Arbeitsbereichs (A) und einer Position zum Beschicken der Platte (L), die sich in einem Beschickungsbereich (LS) befindet, bewegt werden kann; und
- zumindest einige der Saugnapfeinheiten (V) von dem Wagen (8) mittels mobiler Träger getragen sind, die mittels eines oder mehrerer von dem Wagen (8) getragener Aktuatoren angetrieben und von der elektronischen Steuerung (E) derart gesteuert werden können, dass die Anordnung in einer horizontalen Ebene der Saugnapfeinheiten (V) auf dem Wagen (8) von der elektronischen Steuerung (E) auf Basis der von der elektronischen Steuerung (E) erfassten Informationen über die Form und Abmessungen der Platte verstellt wird, so dass:
- eine zu bearbeitende Platte (L) auf den von dem Wagen (8) getragenen Saugnapfeinheiten (V) abgelegt werden kann, wenn sich der Wagen in seiner Beschickungsposition in dem Beschickungsbereich (LS) außerhalb des Arbeitsbereichs befindet, falls erforderlich nachdem die Position der Saugnapfeinheiten (V) auf dem Wagen (8) mittels der elektronischen Steuerung (E) in Abhängigkeit von der Größe und Form der Platte verstellt wurde;
- die Platte (L) auf dem Wagen (8) durch Aktivierung der Saugnapfeinheiten (V) verriegelt werden kann; und
- die Platte (L) dann über eine Bewegung des Wagens (8) bis zu einer Position in dem Arbeitsbereich (A) derart in den Arbeitsbereich (A) gebracht werden kann, dass die Platte (L) mittels der Saugnapfeinheiten (V) in der Position in dem Arbeitsbereich (A) verriegelt bleibt, während der Bearbeitungskopf (H) einen Bearbeitungszyklus an der Umfangskante der Platte ausführt,
wobei das Arbeitszentrum (1) **dadurch gekennzeichnet ist, dass** sich der Beschickungsbereich (LS) außerhalb des Arbeitsbereichs (A) auf der Außenseite eines den Arbeitsbereich (A) umgebenden Zauns befindet.

2. Arbeitszentrum nach Anspruch 1, **dadurch gekennzeichnet, dass** das Arbeitszentrum in dem Beschickungsbereich (LS) eine stationäre Struktur aufweist, die ein erstes Fixierungselement (9) zum Fixieren der Platte (L) in Position in einer ersten horizontalen Referenzrichtung (X) und ein zweites Fixierungselement (10) zum Fixieren der Platte (L) in Position in einer zweiten horizontalen Referenzrichtung (Y) orthogonal zu der ersten horizontalen Referenzrichtung (X) trägt,
wobei mindestens eines der Fixierungselemente (9, 10) in der jeweiligen horizontalen Referenzrichtung in der Position verstellbar ist,
so dass, wenn sich der Wagen (8) in dem Beschickungsbereich (LS) befindet, eine Platte (L) auf den Saugnapfeinheiten (V) des Wagens (8) bei deaktivierten Saugnapfeinheiten (V) positioniert werden kann, und dann gegen sowohl das erste Fixierungselement (9) als auch das zweite Fixierungselement (10) gebracht werden kann, um die Platte (L) in den horizontalen Referenzrichtungen (X, Y) in Position zu fixieren, wonach die Saugnapfeinheiten aktiviert werden können, um die Platte (L) auf dem Wagen (8) zu verriegeln.

3. Arbeitszentrum nach Anspruch 2, **dadurch gekennzeichnet, dass** die erste horizontale Referenzrichtung (X) der Platte parallel zur Richtung (X) einer Bewegung des Wagens (8) ist und die zweite horizontale Richtung (Y) orthogonal zur Richtung (X) einer Bewegung des Wagens (8) ist.

4. Arbeitszentrum nach Anspruch 3, **dadurch gekennzeichnet, dass** sich das erste Fixierungselement (9) zum Fixieren der Platte (L) in Position in der ersten horizontalen Referenzrichtung (X) in einer fixierten Position befindet, während das zweite Fixierungselement (10) zum Fixieren der Platte (L) in Position in der zweiten horizontalen Referenzrichtung (Y) in der zweiten horizontalen Referenzrichtung (Y) in der Position verstellt werden kann.

5. Arbeitszentrum nach Anspruch 4, **dadurch gekennzeichnet, dass** die elektronische Steuerung (E) dazu ausgelegt ist, Informationen über die Position des ersten Fixierungselements (9) und des zweiten Fixierungselements (10) zu empfangen und infolgedessen die Position der Platte (L) zu erfassen, sobald die Platte (L) auf den Saugnapfeinheiten (V) des Wagens (8) in dem Beschickungsbereich (LS) positioniert wurde und derart gegen das erste Fixierungselement (9) und das zweite Fixierungselement (10) gebracht wurde, dass, wenn die elektronische Steuerung (E) einen Befehl zur Bewegung des Wagens (8) in den Arbeitsbereich ausgibt, die elektronische Steuerung (E) auch in der Lage ist, die von der Platte (L) in dem Arbeitsbereich erreichte endgültige Position zu bestimmen.

6. Arbeitszentrum nach Anspruch 5, **dadurch gekennzeichnet, dass** die elektronische Steuerung (E) dazu ausgelegt ist, die Position des zweiten Fixierungselements (10) in der zweiten horizontalen Referenzrichtung (Y) zu verstellen und die Position des Wagens (8) in dem Beschickungsbereich (LS) in der ersten horizontalen Richtung (X) auf Basis der Informationen über die Form und Abmessungen der Platte derart zu verstellen, dass, wenn die Platte (L) auf den Saugnapfeinheiten (V) des Wagens (8) in dem Beschickungsbereich (LS) positioniert ist und gegen das erste Fixierungselement (9) und das zweite Fixierungselement (10) gebracht ist, die Platte in einer voreingestellten Position in Bezug auf den Wagen (8) fixiert wird.

7. Arbeitszentrum nach Anspruch 1, **dadurch gekennzeichnet, dass** die Saugnapfeinheiten (V) auch jeweils in einer vertikalen Richtung Z zwischen einer angehobenen, aktiven Position eines Eingriffs der Oberfläche der Platte (L) und einer abgesenkten, nicht betriebsbereiten Position derart mobil sind, dass eine oder mehrere Saugnapfeinheiten (V) in der Lage sind, einen Teil der Platte, der Bearbeitungsabfall darstellt, nach der Bearbeitung in dem Arbeitsbereich zurückzuhalten und den Abfall mittels einer Absenkbewegung der Saugnapfeinheiten (V), die den Abfall tragen, vom restlichen Teil der Platte zu trennen.

8. Arbeitszentrum nach Anspruch 1, **dadurch gekennzeichnet, dass** angrenzend an den Beschickungsbereich (LS) eine oder mehrere Plattendetektionsvorrichtungen vorab angeordnet sind, die dazu ausgelegt sind, Abmessungen und eine Position einer auf die vom Wagen (8) getragenen Saugnapfeinheiten (V) gesetzten Platte zu detektieren und Daten, die die detektierten Abmessungen und die detektierte Position angeben, an die elektronische Steuerung (E) zu senden.

9. Arbeitszentrum nach Anspruch 8, **dadurch gekennzeichnet, dass** es angrenzend an den Beschickungsbereich (LS) eine optische Detektionsvorrichtung umfasst, die mittels eines servogesteuerten Elektromotors in einer Richtung (Y) quer zur Längsrichtung (X) einer Bewegung des Wagens (8) bewegt werden kann.

10. Arbeitszentrum nach Anspruch 9, **dadurch gekennzeichnet, dass** die elektronische Steuerung (E) dazu ausgelegt ist, eine Relativbewegung der optischen Detektionsvorrichtung in Bezug auf eine in dem Beschickungsbereich (LS) positionierte Platte (L) sowohl in der Längsrichtung (X) entlang zwei Trajektorien angrenzend an zwei Längskanten der Platte (L) als auch in der Querrichtung (Y) entlang zwei Trajektorien angrenzend an zwei Endkanten der Platte (L) zu steuern.

11. Verfahren zum Bearbeiten von Platten aus Glas oder Platten aus Natur- oder Kunststeinmaterial, umfassend:
- Versorgen einer elektronischen Steuerung mit Informationen über die Form und/oder Abmessungen einer zu bearbeitenden Platte und/oder über an der Platte auszuführende Vorgänge;
- Bewegen eines Bearbeitungskopfs (H) über einen Arbeitsbereich (A) gemäß drei zueinander orthogonalen Achsen (X, Y, Z) mittels jeweiliger Elektromotoren (M1, M2, M3), die von der elektronischen Steuerung gemäß einem voreingestellten Programm derart gesteuert werden, dass ein Bearbeitungszyklus einer Umfangskante einer Platte (L), die sich in dem Arbeitsbereich (A) befindet, ausgeführt wird;
- während einer Ausführung des Bearbeitungszyklus, Halten der Platte in dem Arbeitsbereich in einer fixierten horizontalen Position in einem Abstand von einer Oberfläche des Arbeitsbereichs (A), Eingreifen der unteren Fläche der Platte (L) mit einer Mehrzahl von Saugnapfeinheiten (V) derart, dass die Umfangskante der Platte (L) frei ist, um durch den Bearbeitungskopf bearbeitet zu werden, wobei die Saugnapfeinheiten durch Steuern einer Verbindung der Saugnapfeinheiten (V) mit einer Unterdruckquelle aktivierbar und deaktivierbar sind,
wobei
- die Saugnapfeinheiten (V), die die Platte in dem Arbeitsbereich (A) zurückhalten, von einem Wagen (8) getragen sind, der mittels eines von der elektronischen Steuerung (E) gesteuerten Elektromotors (M) in einer horizontalen Richtung (X) zwischen einer Arbeitsposition innerhalb des Arbeitsbereichs (A) und einer Position zum Beschicken der Platte (L), die sich in einem Beschickungsbereich (LS) befindet, bewegt wird; und
- zumindest einige der Saugnapfeinheiten (V) von dem Wagen (8) mittels mobiler Träger getragen sind, die mittels eines oder mehrerer von dem Wagen (8) getragener Aktuatoren angetrieben und von der elektronischen Steuerung (E) derart gesteuert werden können, dass die Anordnung in einer horizontalen Ebene der Saugnapfeinheiten (V) auf dem Wagen (8) von der elektronischen Steuerung (E) auf Basis der von der elektronischen Steuerung (E) erfassten Informationen über die Form und Abmessungen der Platte verstellt wird, so dass:
- eine zu bearbeitende Platte (L) auf den von dem Wagen (8) getragenen Saugnapfeinheiten (V) abgelegt werden kann, wenn sich der Wagen in seiner Beschickungsposition in dem Beschickungsbereich (LS) außerhalb des Arbeitsbereichs befindet, falls erforderlich nachdem die Position der Saugnapfeinheiten (V) auf dem Wagen (8) mittels der elektronischen Steuerung (E) auf Basis der Informationen über die Größe und/oder Form der Platte verstellt wurde,
- die Platte (L) auf dem Wagen (8) durch Aktivierung der Saugnapfeinheiten (V) verriegelt wird, und
- die Platte (L) dann über eine Bewegung des Wagens (8) bis zu einer Position in dem Arbeitsbereich (A) derart in den Arbeitsbereich (A) getragen wird, dass die Platte (L) mittels der Saugnapfeinheiten (V) in der Position in dem Arbeitsbereich (A) verriegelt bleibt, während der Bearbeitungskopf (H) einen Bearbeitungszyklus an der Umfangskante der Platte ausführt,
**dadurch gekennzeichnet, dass** sich der Beschickungsbereich (LS) außerhalb des Arbeitsbereichs (A) auf der Außenseite eines den Arbeitsbereich (A) umgebenden Zauns befindet.

12. Verfahren nach Anspruch 11, **dadurch gekennzeichnet, dass** in dem Beschickungsbereich (LS) eine stationäre Struktur ein erstes Fixierungselement (9) zum Fixieren der Platte in Position in einer ersten horizontalen Referenzrichtung (X) und ein zweites Fixierungselement (10) zum Fixieren der Platte (L) in Position in einer zweiten horizontalen Referenzrichtung (Y) orthogonal zu der ersten horizontalen Referenzrichtung (X) trägt,
wobei mindestens eines der Fixierungselemente (9, 10) in der jeweiligen horizontalen Referenzrichtung in der Position verstellbar ist,
so dass, wenn sich der Wagen (8) in dem Beschickungsbereich (LS) befindet, eine Platte (L) auf den Saugnapfeinheiten (V) des Wagens (8) bei deaktivierten Saugnapfeinheiten (V) positioniert wird, und dann gegen sowohl das erste Fixierungselement (9) als auch das zweite Fixierungselement (10) gebracht wird, um die Platte (L) in den horizontalen Referenzrichtungen (X, Y) in Position zu fixieren, wonach die Saugnapfeinheiten aktiviert werden können, um die Platte (L) auf dem Wagen (8) zu verriegeln.

13. Verfahren nach Anspruch 12, **dadurch gekennzeichnet, dass** die erste horizontale Referenzrichtung (X) der Platte parallel zur Richtung (X) einer Bewegung des Wagens (8) ist und die zweite horizontale Referenzrichtung (Y) orthogonal zur Richtung (X) einer Bewegung des Wagens (8) ist.

14. Verfahren nach Anspruch 13, **dadurch gekennzeichnet, dass** die elektronische Steuerung (E) Informationen über die Position des ersten Fixierungselements (9) und des zweiten Fixierungselements (10) empfängt und infolgedessen die Position der Platte (L) erfasst, sobald die Platte (L) auf den Saugnapfeinheiten (V) des Wagens (8) in dem Beschickungsbereich (LS) positioniert wurde und gegen das erste Fixierungselement (9) und das zweite Fixierungselement (10) gebracht wurde,
wonach die elektronische Steuerung (E) einen Befehl zur Bewegung des Wagens (8) in den Arbeitsbereich ausgibt, wobei infolgedessen die von der Platte (L) in dem Arbeitsbereich erreichte endgültige Position bestimmt wird.

15. Verfahren nach Anspruch 14, **dadurch gekennzeichnet, dass** auf Basis der Informationen über Form und Abmessungen der Platte die elektronische Steuerung (E) über einen Aktuator die Position des zweiten Fixierungselements (10) in der zweiten horizontalen Referenzrichtung (Y) verstellt, und über einen Elektromotor zum Antreiben des Wagens (8) die elektronische Steuerung (E) die Position des Wagens (8) in dem Beschickungsbereich (LS) in der ersten horizontalen Richtung (X) derart verstellt, dass, wenn die Platte (L) auf den Saugnapfeinheiten (V) des Wagens (8) in dem Beschickungsbereich (LS) positioniert ist und gegen das erste Fixierungselement (9) und das zweite Fixierungselement (10) gebracht ist, die Platte in einer voreingestellten Position in Bezug auf den Wagen (8) fixiert wird.

## Revendications

1. Centre de travail à commande numérique (1) pour l'usinage de plaques de verre ou de plaques en pierre naturelle ou synthétique, du type dans lequel une plaque (L) à traiter est maintenue en position fixe pendant le travail, ledit centre de travail comprenant :
- une structure porteuse (2) définissant une zone de travail (A) ;
- une tête d'usinage (H) qui peut être déplacée sur la zone de travail (A) selon trois axes mutuellement orthogonaux (X, Y, Z) au moyen de moteurs électriques asservis respectifs (M1, M2, M3), dans lequel ladite tête d'usinage (H) comprend une unité de broche, avec une broche à axe vertical, un moteur électrique pour entraîner la broche, et un outil d'usinage relié de manière amovible à la broche ;
- un contrôleur électronique (E) configuré pour commander, selon un programme prédéterminé, lesdits moteurs électriques (M1, M2, M3) qui commandent le déplacement de la tête d'usinage (H) et le moteur électrique pour entraîner la broche de manière à effectuer un cycle d'usinage d'un bord périphérique de la plaque (L) qui se trouve dans la zone de travail (A) ;
- une interface homme-machine pour fournir au contrôleur électronique des informations sur la forme et/ou les dimensions d'une plaque à usiner et/ou sur les opérations à effectuer sur la plaque ; et
- une pluralité de ventouses (V), conçues pour venir en prise avec la face inférieure d'une plaque (L) afin de maintenir la plaque dans la zone de travail dans une position horizontale fixe, à distance d'une surface de la zone de travail (A), de telle sorte que le bord périphérique de la plaque (L) peut être usiné librement par l'outil de la tête d'usinage, lesdites ventouses pouvant être activées ou désactivées par commande d'un raccordement des ventouses (V) à une source de pression négative,
dans lequel
- les ventouses (V) destinées à retenir la plaque dans la zone de travail (A) sont portées par un chariot (8) qui peut être déplacé, au moyen d'un moteur électrique (M) commandé par ledit contrôleur électronique (E), dans une direction horizontale (X), entre une position de travail à l'intérieur de la zone de travail (A) et une position de chargement de la plaque (L) située dans une zone de chargement (LS) ; et
- au moins une partie des ventouses (V) est portée par ledit chariot (8) au moyen de supports mobiles, qui peuvent être entraînés au moyen d'un ou de plusieurs actionneurs portés par le chariot (8) et commandés par ledit contrôleur électronique (E) de telle sorte que la disposition dans un plan horizontal des ventouses (V) sur ledit chariot (8) est réglée par ledit contrôleur électronique (E) sur la base des informations acquises par le contrôleur électronique (E) sur la forme et les dimensions de la plaque,
de telle manière que :
- une plaque (L) à usiner peut reposer sur les ventouses (V) portées par ledit chariot (8) lorsque le chariot est dans sa position de chargement dans ladite zone de chargement (LS) à l'extérieur de la zone de travail, si nécessaire après réglage de la position des ventouses (V) sur le chariot (8), au moyen dudit contrôleur électronique (E), en fonction de la taille et de la forme de la plaque ;
- ladite plaque (L) peut être bloquée sur ledit chariot (8) par activation des ventouses (V) ; et
- la plaque (L) peut ensuite être amenée dans la zone de travail (A) par déplacement du chariot (8) jusqu'à une position dans la zone de travail (A), de telle sorte que la plaque (L) reste bloquée, au moyen des ventouses (V), dans ladite position dans la zone de travail (A), tandis que la tête d'usinage (H) effectue un cycle d'usinage sur le bord périphérique de la plaque,
le centre de travail (1) étant **caractérisé en ce que** la zone de chargement (LS) se trouve à l'extérieur de la zone de travail (A) sur la face extérieure d'une clôture entourant la zone de travail (A).

2. Centre de travail selon la revendication 1, **caractérisé en ce que** dans ladite zone de chargement (LS), ledit centre de travail a une structure fixe qui porte un premier élément de positionnement (9), pour positionner la plaque (L) dans une première direction de référence horizontale (X), et un second élément de positionnement (10), pour positionner la plaque (L) dans une seconde direction de référence horizontale (Y), orthogonale à la première direction de référence horizontale (X),
au moins un desdits éléments de positionnement (9, 10) étant réglable en position dans la direction de référence horizontale respective,
de sorte que, lorsque le chariot (8) se trouve dans la zone de chargement (LS) précitée, une plaque (L) peut être positionnée sur les ventouses (V) du chariot (8) précité, les ventouses (V) étant désactivées, et peut ensuite être amenée contre le premier élément de positionnement (9) et le second élément de positionnement (10) afin de positionner la plaque (L) dans lesdites directions de référence horizontales (X, Y), après quoi les ventouses peuvent être activées pour bloquer la plaque (L) sur le chariot (8).

3. Centre de travail selon la revendication 2, **caractérisé en ce que** ladite première direction de référence horizontale (X) de la plaque est parallèle à la direction (X) de déplacement du chariot (8) et ladite seconde direction horizontale (Y) est orthogonale à la direction (X) de déplacement du chariot (8).

4. Centre de travail selon la revendication 3, **caractérisé en ce que** le premier élément de positionnement (9) servant à positionner la plaque (L) dans la première direction de référence horizontale (X) est dans une position fixe, tandis que le second élément de positionnement (10) servant à positionner la plaque (L) dans la seconde direction de référence horizontale (Y) peut être réglé en position dans ladite seconde direction de référence horizontale (Y).

5. Centre de travail selon la revendication 4, **caractérisé en ce que** ledit contrôleur électronique (E) est configuré pour recevoir des informations sur la position dudit premier élément de positionnement (9) et dudit second élément de positionnement (10) et par conséquent pour acquérir la position de la plaque (L) une fois que la plaque (L) a été positionnée sur les ventouses (V) du chariot (8) dans ladite zone de chargement (LS) et a été amenée contre le premier élément de positionnement (9) et le second élément de positionnement (10), de telle sorte que, lorsque le contrôleur électronique (E) émet une commande de déplacement du chariot (8) dans la zone de travail, ledit contrôleur électronique (E) peut également déterminer la position finale atteinte par la plaque (L) dans la zone de travail.

6. Centre de travail selon la revendication 5, **caractérisé en ce que** le contrôleur électronique (E) est configuré pour régler la position dudit second élément de positionnement (10) dans la seconde direction de référence horizontale (Y) et pour régler la position du chariot (8) dans ladite zone de chargement (LS) dans la première direction horizontale (X), sur la base des informations sur la forme et les dimensions de la plaque, de telle sorte que lorsque la plaque (L) est positionnée sur les ventouses (V) du chariot (8) dans la zone de chargement (LS) et est amenée contre le premier élément de positionnement (9) et le second élément de positionnement (10), la plaque se trouve dans une position prédéterminée par rapport au chariot (8).

7. Centre de travail selon la revendication 1, **caractérisé en ce que** les ventouses (V) sont également chacune mobiles dans une direction verticale Z, entre une position relevée active d'engagement de la surface de la plaque (L) et une position abaissée inactive, de telle sorte qu'une ou plusieurs ventouses (V) peuvent retenir une partie de la plaque constituant des déchets d'usinage suite à l'usinage dans la zone de travail et séparer les déchets de la partie restante de la plaque au moyen d'un mouvement d'abaissement des ventouses (V) qui transportent les déchets.

8. Centre de travail selon la revendication 1, **caractérisé en ce que**, à proximité de ladite zone de chargement (LS), un ou plusieurs dispositifs de détection de plaque sont prédisposés, configurés pour détecter les dimensions et la position d'une plaque placée sur lesdites ventouses (V) portées par le chariot (8) et pour envoyer audit contrôleur électronique (E) des données indiquant lesdites dimensions et position détectées.

9. Centre de travail selon la revendication 8, **caractérisé en ce qu'**il comprend, à proximité de la zone de chargement (LS), un dispositif de détection optique qui peut être déplacé au moyen d'un moteur électrique asservi dans une direction (Y) transversale à la direction longitudinale (X) de déplacement dudit chariot (8).

10. Centre de travail selon la revendication 9, **caractérisé en ce que** ledit contrôleur électronique (E) est configuré pour commander un déplacement relatif du dispositif de détection optique par rapport à une plaque (L) positionnée dans ladite zone de chargement (LS) à la fois dans ladite direction longitudinale (X), le long de deux trajectoires adjacentes à deux bords longitudinaux de la plaque (L), et dans ladite direction transversale (Y) le long de deux trajectoires adjacentes à deux bords d'extrémité de la plaque (L).

11. Procédé d'usinage de plaques de verre ou de plaques en pierre naturelle ou synthétique comprenant :
- la fourniture à un contrôleur électronique d'informations sur la forme et/ou les dimensions d'une plaque à usiner et/ou sur les opérations à effectuer sur la plaque ;
- le déplacement d'une tête d'usinage (H) sur une zone de travail (A) selon trois axes mutuellement orthogonaux (X, Y, Z) au moyen de moteurs électriques respectifs commandés (M1, M2, M3) par ledit contrôleur électronique selon un programme préétabli de manière à effectuer un cycle d'usinage d'un bord périphérique d'une plaque (L) située dans la zone de travail (A) ;
- pendant l'exécution du cycle d'usinage, le maintien de la plaque dans la zone de travail dans une position horizontale fixe, à distance d'une surface de la zone de travail (A), la mise en prise de la face inférieure de la plaque (L) avec plusieurs ventouses (V) de telle sorte que le bord périphérique de la plaque (L) peut être usiné librement par la tête d'usinage, lesdites ventouses pouvant être activées ou désactivées par commande d'un raccordement des ventouses (V) à une source de pression négative,
dans lequel
- les ventouses (V) qui retiennent la plaque dans la zone de travail (A) sont portées par un chariot (8) qui est déplacé, au moyen d'un moteur électrique (M) commandé par ledit contrôleur électronique (E), dans une direction horizontale (X), entre une position de travail à l'intérieur de la zone de travail (A) et une position de chargement de la plaque (L) située dans une zone de chargement (LS) ; et
- au moins une partie des ventouses (V) est portée par ledit chariot (8) au moyen de supports mobiles, qui peuvent être entraînés au moyen d'un ou de plusieurs actionneurs portés par le chariot (8) et commandés par ledit contrôleur électronique (E) de telle sorte que la disposition dans un plan horizontal des ventouses (V) sur ledit chariot (8) est réglée par ledit contrôleur électronique (E) sur la base des informations acquises par le contrôleur électronique (E) sur la forme et les dimensions de la plaque,
de telle manière que :
- une plaque (L) à usiner repose sur les ventouses (V) portées par ledit chariot (8) lorsque le chariot est dans sa position de chargement dans ladite zone de chargement (LS) à l'extérieur de la zone de travail, si nécessaire après réglage de la position des ventouses (V) sur le chariot (8), au moyen dudit contrôleur électronique (E), sur la base des informations sur la taille et/ou la forme de la plaque,
- ladite plaque (L) est bloquée sur ledit chariot (8) par activation des ventouses (V), et
- la plaque (L) est ensuite amenée dans la zone de travail (A) par déplacement du chariot (8) jusqu'à une position dans la zone de travail (A), de telle sorte que la plaque (L) reste bloquée, au moyen des ventouses (V), dans ladite position dans la zone de travail (A), tandis que la tête d'usinage (H) effectue un cycle d'usinage sur le bord périphérique de la plaque,
**caractérisé en ce que** la zone de chargement (LS) se trouve à l'extérieur de la zone de travail (A) sur la face extérieure d'une clôture entourant la zone de travail (A).

12. Procédé selon la revendication 11, **caractérisé en ce que** dans ladite zone de chargement (LS), une structure fixe porte un premier élément de positionnement (9), pour positionner la plaque dans une première direction de référence horizontale (X), et un second élément de positionnement (10), pour positionner la plaque (L) dans une seconde direction de référence horizontale (Y), orthogonale à la première direction de référence horizontale (X),
au moins un desdits éléments de positionnement (9, 10) étant réglable en position dans la direction de référence horizontale respective,
de sorte que, lorsque le chariot (8) se trouve dans la zone de chargement (LS) précitée, une plaque (L) est positionnée sur les ventouses (V) du chariot (8) précité, les ventouses (V) étant désactivées, et est ensuite amenée contre le premier élément de positionnement (9) et le second élément de positionnement (10) afin de positionner la plaque (L) dans lesdites directions de référence horizontales (X, Y), après quoi les ventouses sont activées pour bloquer la plaque (L) sur le chariot (8).

13. Procédé selon la revendication 12, **caractérisé en ce que** ladite première direction de référence horizontale (X) de la plaque est parallèle à la direction (X) de déplacement du chariot (8), et ladite seconde direction de référence horizontale (Y) est orthogonale à la direction (X) de déplacement du chariot (8).

14. Procédé selon la revendication 13, **caractérisé en ce que** ledit contrôleur électronique (E) reçoit des informations sur la position dudit premier élément de positionnement (9) et dudit second élément de positionnement (10) et acquiert par conséquent la position de la plaque (L) une fois que la plaque (L) a été positionnée sur les ventouses (V) du chariot (8) dans ladite zone de chargement (LS) et a été amenée contre le premier élément de positionnement (9) et le second élément de positionnement (10),
après quoi le contrôleur électronique (E) émet une commande de déplacement du chariot (8) dans la zone de travail, déterminant ainsi la position finale atteinte par la plaque (L) dans la zone de travail.

15. Procédé selon la revendication 14, **caractérisé en ce que**, sur la base des informations sur la forme et les dimensions de la plaque, le contrôleur électronique (E) règle, par l'intermédiaire d'un actionneur, la position dudit second élément de positionnement (10) dans la seconde direction de référence horizontale (Y) et, par l'intermédiaire d'un moteur électrique pour entraîner le chariot (8), le contrôleur électronique (E) règle la position du chariot (8) dans ladite zone de chargement (LS) dans la première direction horizontale (X) de telle sorte que, lorsque la plaque (L) est positionnée sur les ventouses (V) du chariot (8) dans la zone de chargement (LS) et est amenée contre le premier élément de positionnement (9) et le second élément de positionnement (10), la plaque se trouve dans une position prédéterminée par rapport au chariot (8).
